# EUROPEAN PATENT APPLICATION

(11) **EP 4 742 772 A1**
(43) Date of publication of application: **13.05.2026**
(21) Application number: 24211513.7
(22) Date of filing: 07.11.2024
(51) Int. Cl.: H04W 52/02, H04W 24/08, H04W 48/00

(54) **COMMUNICATION APPARATUS AND COMMUNICATION METHOD**

(71) Applicant: Panasonic Intellectual Property Corporation of America, Torrance, CA 90504 (US)
(72) Inventor: LI, Hongchao, 63225 Langen (DE); HORIIKE, Naoto, Osaka, 571-8501 (JP); SUZUKI, Hidetoshi, Osaka, 571-8501 (JP); ISHIKAWA, Akira, Osaka, 571-0057 (JP)
(74) Representative: Grünecker Patent- und Rechtsanwälte PartG mbB

(57) **Abstract**

The present disclosure relates to a communication apparatus comprising the following. A transceiver of the communication apparatus, in operation, receives, a signal indicating a first sequence and a second sequence. A processing circuitry of the communication apparatus, in operation, obtains first information from the first sequence and obtains second information from the second sequence, detects presence or absence of a misalignment between the first information and the second information, and in a case of detecting the presence of a misalignment between the first information and the second information performs at least one of the following operations: (i) discarding at least one of the first information and the second information, (ii) performing a transition to a main radio monitoring operation of the communication apparatus, and (iii) performing an error operation.

## Description

### FIELD OF THE PRESENT DISCLOSURE

The present disclosure is directed to methods, devices and articles in communication systems, such as 3GPP communication systems.

### TECHNICAL BACKGROUND

Currently, the 3rd Generation Partnership Project (3GPP) works at the technical specifications for the new radio access technology - 5G NR (New Radio), which is also called fifth generation (5G) or NR and used interchangeably herein.

One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand broad bandwidth, while they are different in that the URLLC service may preferably require ultra-low latencies.

A second objective is to achieve forward compatibility, which facilitates a completely new system design and/or the introduction of novel features.

### Summary

One non-limiting and exemplary embodiment facilitates providing procedures for a UE to perform improved data transmission and reception procedures. In an embodiment, the techniques disclosed here feature: A communication apparatus, comprising a transceiver, which, in operation, receives, a signal indicating a first sequence and a second sequence, circuitry, which, in operation, obtains first information from the first sequence and obtains second information from the second sequence, detects presence or absence of a misalignment between the first information and the second information, and in a case of detecting the presence of a misalignment between the first information and the second information performs at least one of the following operations: (i) discarding at least one of the first information and the second information, (ii) performing a transition to a main radio monitoring operation of the communication apparatus, and (iii) performing an error operation.

It should be noted that general or specific embodiments may be implemented as a system, a method, an integrated circuit, a computer program, a storage medium, or any selective combination thereof.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

### Brief description of the Figures

In the following exemplary embodiments are described in more detail with reference to the attached figures and drawings.
- **Fig. 1**: shows an exemplary architecture for a 3GPP NR system to which the exemplary embodiments of the present disclosure may be applied;
- **Fig. 2**: illustrates transitioning between LR operation and MR operation of a communication apparatus;
- **Fig. 3**: illustrates a section of a low-power signal, being an OOK signal, with sequences overlaid on On-durations of the signal; and
- **Fig. 4**: illustrates an exemplary and simplified structure of a user equipment (UE) and a base station;
- **Fig. 5**: illustrates a functional structure of the circuitries pertaining to the UE;
- **Fig. 6**: illustrates a functional structure of the circuitries pertaining to the base station;
- **Fig. 7**: illustrates an exemplary and simplified flow diagram for the base station behavior according to an exemplary implementation of the present disclosure;
- **Fig. 8**: illustrates an exemplary and simplified flow diagram for the UE behavior according to an exemplary implementation of the present disclosure;
- **Fig. 9**: is a flow chart illustrating steps of an information misalignment handling operation performed by a communication apparatus in accordance with a first exemplary implementation of the present disclosure;
- **Fig. 10**: is a flow chart illustrating steps of an information misalignment handling operation performed by a communication apparatus in accordance with a second exemplary implementation of the present disclosure;
- **Fig. 11**: is a flow chart illustrating steps of an information misalignment handling operation performed by a communication apparatus in accordance with a third exemplary implementation of the present disclosure;
- **Fig. 12**: is a flow chart illustrating steps of an information misalignment handling operation performed by a communication apparatus in accordance with a fourth exemplary implementation of the present disclosure;
- **Fig. 13**: is a flow chart illustrating steps of an information misalignment handling operation performed by a communication apparatus in accordance with a fifth exemplary implementation of the present disclosure;
- **Fig. 14**: is a flow chart illustrating steps of an information misalignment handling operation performed by a communication apparatus in accordance with a sixth exemplary implementation of the present disclosure;
- **Fig. 15**: is a flow chart illustrating steps of an information misalignment handling operation performed by a communication apparatus in accordance with a seventh exemplary implementation of the present disclosure;
- **Fig. 16**: is a flow chart illustrating steps of an information misalignment handling operation performed by a communication apparatus in accordance with an eight exemplary implementation of the present disclosure;
- **Fig. 17**: is a flow chart illustrating steps of an information misalignment handling operation performed by a communication apparatus in accordance with a ninth exemplary implementation of the present disclosure;
- **Fig. 18**: is a flow chart illustrating steps of an information misalignment handling operation performed by a communication apparatus in accordance with a tenth exemplary implementation of the present disclosure;
- **Fig. 19**: shows exemplary functional split options in 5G open-radio access network (O-RAN).

### DETAILED DESCRIPTION

### 5G NR system architecture and protocol stacks

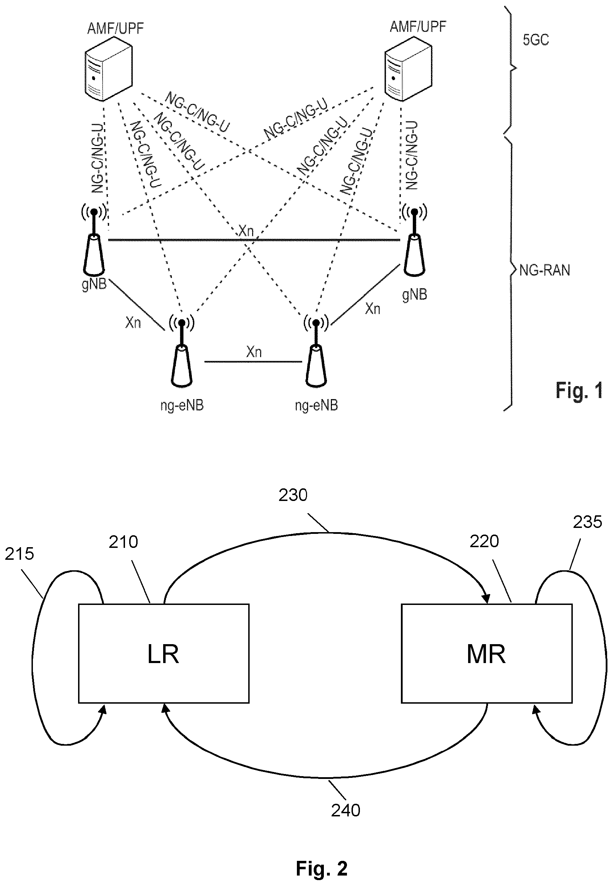

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gN Bs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig.** 1 (see e.g. 3GPP TS 38.300 v15.6.0, section 4).

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.2.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

### Power saving

A new study item has been started within 3GPP, aiming at studying and evaluating low-power wake-up receiver (LP-WUR) architectures and wake-up signal (LP-WUS) designs to support wake-up receivers. One of the targets is to achieve a substantial UE power saving gain. A report capturing this study item is available at http://www.3gpp.org and titled "Low-power Wake-up Signal and Receiver for NR as a Rel.18 SI topic" with contribution number RP-221271 from 3GPP TSG RAN meeting #96 in Hungary, June 6- 9, 2022.

Accordingly, power consumption depends on the configured length of wake-up periods, e.g., paging cycle. To meet the battery life requirements above, eDRX (extended Discontinuous Reception) cycle with large value is expected to be used, resulting in high latency, which may not be suitable for such services with requirements of both long battery life and low latency. Especially for latency-critical use cases, eDRX is not suitable.

Currently, UEs need to periodically wake up once per DRX cycle, which dominates the power consumption in periods with no signaling or data traffic. DRX is used in RRC idle mode when monitoring for paging messages. Accordingly, a UE does not have to monitor all PDCCH transmission opportunities, but rather only the paging occasions, and can thus better preserve battery power. In connected mode, DRX allows a UE to enter into a "sleep" sate during which it does not need to monitor PDCCH. The UE periodically wakes up to monitor PDCCH or to send a scheduling request for initiating an uplink data transfer. Thus, a base station (gNB) is required to wait until the UE becomes active and only then transmit data to it. Uplink is not delayed, unless the base station configures uplink scheduling request period according to the downlink DRX cycle.

DRX cycle in connected mode is configured by RRC. An inactivity timer is started after each PDCCH reception. After expiry of the inactivity timer, there may be an optional period of short DRX cycles, before the regular (long) DRX cycles. The active period in which the UE reads PDCCH is referred to as "OnDuration" or "DRX active" state. The sleeping period in which the UE does not read PDCCH is referred to as "OffDuration" or "DRX inactive" state. A base station has the possibility to send a UE into the DRX inactive mode anytime by using MAC signaling.

Since Release16, a wake-up signal (WUS) has been provided by a DCI format 2_6. The DCI format 2_6 has been used to wake up a UE or to indicate to a UE to skip PDCCH monitoring before DRX. In particular, this DCI is used for notifying the power saving information outside DRX Active time for one or more UEs. The DCI is scrambled by PS-RNTI and carries:
- Wake-up indication whether the UE is to enter a dormancy state or wake up from the dormancy state; and
- an SCell dormancy indication which is a bitmap where each bit corresponds to one of the SCell group(s) configured by higher layers (RRC), with MSB to LSB of the bitmap corresponding to the first to last configured S
- Cell group. This indicates for which SCells the wake-up indication applies.

In more detail, Section 7.3.1.3.7 of 3GPP TS 38.212 v17.2.0 defines the Format 2_6. Accordingly, DCI format 2_6 is used for notifying the power saving information outside DRXActive Time for one or more UEs. The following information is transmitted by means of the DCI format 2_6 with CRC scrambled by PS-RNTI: *block number 1, block number 2,..., block number N.* The starting position of a block is determined by the parameter PSPositionDCl2-6 provided by higher layers for the UE configured with the block. If the UE is configured with higher layer parameter PS-RNTI and dci-Format2-6, one block is configured for the UE by higher layers, with the following fields defined for the block: Wake-up indication (1 bit), SCell dormancy indication - 0 bit if higher layer parameter Scell-groups-for-dormancy-outside-active-time is not configured; otherwise 1, 2, 3, 4 or 5 bits bitmap determined according to higher layer parameter Scell-groups-for-dormancy-outside-active-time, where each bit corresponds to one of the SCell group(s) configured by higher layers parameter Scell-groups-for-dormancy-outside-active-time, with MSB to LSB of the bitmap corresponding to the first to last configured SCell group. The size of DCI format 2_6 is indicated by the higher layer parameter SizeDCI_2-6.

UE may save power by skipping unnecessary PDCCH monitoring period using format 2_6 DCI. The dormancy can be configured and applied for RRC CONNECTED UEs.

In Release17, a Paging Early Indication (PEI) design has been introduced. It employs DCI format 2_7. DCI format 2_7 is used to indicate UE whether it needs to skip or monitor its paging occasions in each paging cycle. Accordingly, a UE may save power by reducing synchronization signal block (SSB) measurements before detecting PEI, compared with the conventional paging detection, which potentially requires measuring more SSBs. The PEI can be configured in SIB (System Information Block) and applied for paging monitoring of both RRC CONNECTED and IDLE/INACTIVE UEs.

If UEs are able to wake up only when they are triggered, e.g., paging, power consumption could be dramatically reduced. This can be achieved by using a wake-up signal to trigger the main radio and a separate receiver which has the ability to monitor wake-up signal with a very low power consumption. Main radio may work for data transmission and reception, which can be turned off or set to deep sleep unless it is turned on. The power consumption for monitoring wake-up signal depends on the wake-up signal design and the hardware module of the wake-up receiver used for signal detecting and processing.

In order to target low-power WUS/WUR for power-sensitive, small form-factor devices including loT use cases (such as industrial sensors, controllers) and wearables, signal design and transmitter / receiver operations have to be considered carefully. Other use cases are not precluded, such as XR/smart glasses, smart phones, and the like.

In other words, Release 18 LP-WUS/WUR design aims for LP-WUS, which is friendly for more efficient receiver structure, e.g. separate module for LP-WUS detection with relaxed requirement on time/frequency synchronization. The legacy design has been basically DCI-based, which requires UE to firstly measure one or more SSBs for AGC training and time/frequency synchronization before detection. Long active time for receiving and processing SSBs is the main source of power consumption.

### Low power operation

In a low power (or "low-power") operation a UE may receive low power radio reference signals. Such a low power radio reference signal may include, for example, at least one or more of a Low Power Wake Up Signal (LP-WUS), a Low Power Synchronization Signal (LP-SS). Moreover, alternatively or in addition, a low power radio reference signal may include any reference signal that is suitable for performing measurements, such as any reference signals, which are defined by a standard. For example, a SSB or a CSI-RS may be used as a reference signal suitable for a measurement. In general, any signal that is suitable for performing measurements may be used as a low power radio reference signal.

An exemplary Low Power Radio (LR) operation may include measurements based on LP-WUS and/or LP-SS, or any legacy reference signal, such as, for example, one or more of a Primary Synchronization Signal (PSS), a Secondary Synchronization Signal (SSS), a physical broadcast channel demodulation reference signal (PBCH DMRS), in any of an RRC inactive mode or an RRC idle mode. Moreover, the LR operation may include measurements based on LP-WUS and/or LP-SS, or any legacy reference signal, such as PSS/SSS/PBCH DMRS in an RRC connected mode. A time and/or frequency tracing may be performed in the LR operation using one or more of a SSB, a CSI-RS, a LP-WUS or a LP-SS. In such an exemplary LR operation a control channel and/or a control signal, such as, for example, an LP-WUS indicating PDCCH monitoring or a paging signal, may be monitored.

In general, the terms "low power" (LP) and "low power radio" (LR) are used as synonyms throughout this document.

Such a LR operation may be performed as an alternative and/or in addition to a Main Radio operation (MR). For example, a MR operation and a LR operation may use different respective hardware in an UE. For example, a MR operation and a LR operation may use a same hardware in an UE. For example, an UE may comprise a LR transceiver, a LR circuitry, a MR transceiver, and a MR circuitry. For example, said LR transceiver and said LR circuitry may perform the low power operation, whereas the MR transceiver and the MR circuitry may perform the main operation. For example, the LR circuitry and the MR circuitry may be included in a same physical circuity.

In any of said exemplary cases, a MR operation and a LR operation may provide different functionalities of an UE in a respective operational mode. For example, an UE while being in an LR operation mode may perform one or more of the functionalities that are also available in a MR operation mode. The terms "operation", "operational mode", "mode", "state" and "operational state" are used as synonyms with respect to the low power radio and/or the main radio throughout the description.

An exemplary Main Radio (MR) operation may include measurements based on SSBs and/or CSI-RS in any of an RRC inactive mode or an RRC idle mode. Moreover, the MR operation may include measurements based on SSBs and/or CSI-RS in an RRC connected mode. A time and/or frequency tracing may be performed in the MR operation using one or more of a SSB, a CSI-RS, a LP-WUS (Low Power Wake Up Signal) or a LP-SS (Low Power Synchronization Signal). In such an exemplary MR operation a control channel, such as, for example, PDCCH, may be monitored.

In other words, a MR reference signal may include at least one or more of a SSBs and a CSI-RS.

The present disclosure is not limited by such exemplary MR and LR operations. MR and LR operation, especially time/frequency tracking and control channels monitoring, may or may not be explicitly reflected in a standard specification depending on whether MR or LR hardware to operate one or more of the above function(s), but may only nominate which channel, signal and/or reference signal to receive/monitor/measure. Which channel to be measure, e.g., by RRM measurement, may imply MR or LR operation of one or more other channels.

For example, in LR operation, an UE may use specific low power reference signals. In other words, when the UE performs the low power operation, the receiving of the reference signal includes a receiving of the low power radio (LR) reference signal.

Such a low-power reference signal may include a more simplified waveform (relatively to a nonlow-power reference signal). For example, an on-off keying (OOK) modulation and/or a frequencyshift keying (FSK) modulation allow for a lower complexity receiver (relatively to a MR receiver) to receive and monitor said low-power reference signal. Such a low-power reference signal may be, for example, a LP-WUS, which may indicate that UE is to perform a MR operation. Such a low power reference signal may be, for example, LP-SS, for time/frequency domain tracking/synchronization and/or RRM measurement.

When the UE does not perform the low power operation, the receiving of the reference signal includes a receiving of a main radio (MR), reference signal. For example, when not performing a low power operation, the UE may perform a MR operation, a combination of MR and LR operation, or the like.

For example, such a MR reference signal may be a SSB and/or a CSI-RS. The present disclosure is not limited to these exemplary reference signals. In general, any other suitable reference signal may be used for performing a measurement.

### Low-Power Wake-Up Signals, LP-WUS

An LP-WUS design is commonly applicable to both IDLE/INACTIVE and CONNECTED modes. For example, an On-Off-Keying (OOK-OOK-1 and/or OOK-4) based LP-WUS with overlaid OFDM sequence(s) over OOK symbol may be used. The LP-WUS design shall ensure that for IDLE/INACTIVE operation, the same information is delivered irrespective of a LP-WUR type. The OFDM sequence may carry information.

For IDLE/INACTIVE modes, a configuration of LP-WUS may indicate a paging monitoring triggered by the LP-WUS. UEs monitoring the same LP-WUS monitoring occasion may be divided into multiple subgroups, where LP-WUS can provide wake-up indication for each subgroup.

For CONNECTED mode, procedures may allow UE MR PDCCH monitoring triggered by LP-WUS including activation and deactivation procedure of LP-WUS monitoring.

A switching between LR operation and not LR operation may be performed based on information obtained from the LP-WUS.

A transitioning between LR operation and MR operation is exemplarily illustrated as a state machine of two states in Fig. 2. The two states are represented by the LR operation 210 and the MR operation 220. When performing the LR operation 210, if the UE determines that information obtained from the LP-WUS indicates to not change the state, the UE 215 continues the LR operation and does not transition to the MR operation. On the other hand, if the UE determines that information obtained from the LP-WUS indicates to change the state, the UE transitions 230 from the LR operation to the MR operation. In addition, the UE may determine whether or not to change the state based on whether or not a first preconfigured condition is fulfilled. For example, the first preconfigured condition may include whether a LR measurement result is lower than a predefined threshold. Such a threshold for the transitioning from the LR operation to the MR operation may be defined by a standard, a configuration that is received by the UE, or the like.

As will become apparent from the description below, when the UE performs the LR operation to detect the LP-WUS, and when the UE detects an information misalignment between information obtained from the LP-WUS, the UE may either remain in the current LR operation or switch to MR operation. Details on such information misalignment operations will be further explained below.

When performing the MR operation 220, if the UE determines that information obtained in the MR operation indicates to not change the state, the UE 235 continues the MR operation and does not transition to the LR operation. On the other hand, if the UE determines that information obtained in the MR operation indicates to change the state, the UE transitions 230 from the LR operation to the MR operation. In addition, the UE may determine whether or not to change the state based on whether or not a second preconfigured condition is fulfilled. For example, the second preconfigured condition may include whether a MR measurement result is higher than a second preconfigured threshold, which may be different from the first threshold for the transitioning from the MR operation to the LR operation. Similarly as above, such a threshold for the transitioning from the LR operation to the MR operation may be defined by a standard, a configuration that is received by the UE, or the like.

For example, such a transitioning to the LR operation may save UE power by offloading measurement to LR operation when the channel condition is good, e.g. not cell edge or the like.

For example, such a transitioning to the MR operation may ensure an accuracy performance of a measurement. Thus, by switching of the states based on a preconfigured condition facilitates UE power saving and maintaining acceptable measurement performance.

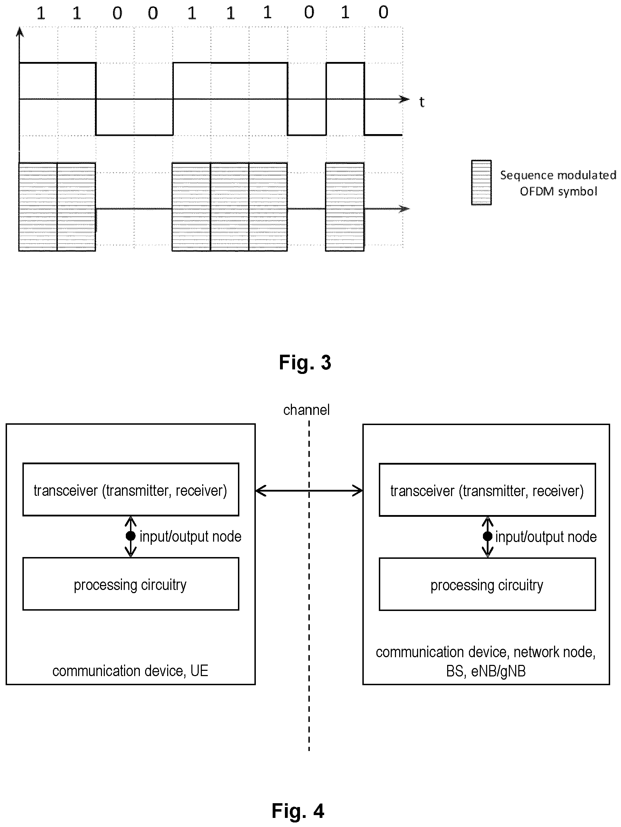

Fig. 3 illustrates a section of such a LP-WUS with overlaid OFDM sequence(s) over symbols of the OOK modulated binary sequence. The LP-WUS comprises one or more On-durations (or "OOK 'ON' symbol" indicated as "1" in the figure) and one or more Off-durations (or "OOK 'OFF' symbol" indicated as "0" in the figure). Some details of sequences overlaid on On-durations of an OOK signal may be found, for instance, in the WID of Rel. 19 in RP-240801.

During the On-durations, a signal may be received by the UE, whereas during the Off-durations, no signal is expected to be received. Further, in the figure, each of the On-durations the signal is overlaid with an OFDM sequence. Hereby, the overlaid OFDM sequence(s) in each OOK 'ON' symbol can be different according to information bits to be carried by the overlaid OFDM sequence within the LP-WUS. In some examples, the overlaid OFDM sequence(s) carry part of information bits of the LP-WUS. In such case, the LP-WUR (e.g. implemented in an UE) can obtain the whole information bits from the OFDM sequence(s) the OFDM sequence(s) and the location of the OOK 'ON' symbol(s), on which the OFDM sequence(s) is (are) overlaid. In other examples, the overlaid OFDM sequence(s) carry all information bits of the LP-WUS. In such case, the LP-WUR (e.g. implemented in an UE) can obtain the whole information bits from the OFDM sequence(s) the OFDM sequence(s) alone.

To enhance the transmission robustness of the information bits carried by the OOK modulated sequence, it is suggested to implement one or more of the following: (i) add a cyclic redundancy check (CRC) code to the information bits, (ii) use a channel coding method different than Manchester coding, eventually including rate matching, (iii) map the information bits to a binary sequence/codeword, eventually including truncation, (iv) apply repetition transmission to the information bits, eventually including rate matching.

### UE measurements and measurement reporting

UE measurements are used for cell selection, cell reselection, power control calculation, mobility procedures and beam management. Measurements are performed for a measurement object. In the current L1 beam measurement framework, a measurement object, which refers to a set of RSs, e.g. SSBs and/or CSI-RS, is semi-statically configured by RRC.

In the low power operation, the measurement reference resource can also be the LP-SS mentioned above. In this case, the measurement can be performed by the UE by using either an OFDM-based receiver or an OOK-based receiver.

A result of such a measurement may include, for example, a Reference Signal Received Power, RSRP, value or a Reference Signal Received Quality, RSRQ, value or a Signal-to-Noise and Interference Ratio, SINR, value. However, the present disclosure is not limited to said examples. Any other suitable result of a measurement may be used.

An UE performs a measurement and reports the measurement results to the serving gNB of the UE. To said end, the UE can be configured by its serving gNB with the necessary parameters and information. For example, the configuration of the UE for performing measurements and reporting the measurement results involves conceptually:
- The quantity or a set of quantities to be reported.
- The downlink resources for each cell on which measurements should be performed in order to derive the quantity or quantities to be reported.
- How the actual reporting is to be carried out, e.g. reporting timing and uplink channel to use for the reporting.

According to one example, the measurement and reporting can be e.g. based on the CSI reporting framework, which generally can be considered to involve two parts, one for configuration and another one for the triggering of the CSI reporting.

The *CSI-MeasConfig* IE is the highest-level IE for CSI configuration and configures not just L1-RSRP-related measurement/reporting for beam management, but also conventional CSI-related measurement/reporting (such as CQI) to determine proper MIMO precoding, modulation and coding, etc.

Mainly three types of lists are configured by the *CSI-MeasConfig* IE:
1) List of RS resource sets
   - Each RS resource set in the list contains one or multiple RS resources. E.g. multiple CSI-RS resources can be configured e.g. by a *NZP-CSI-RS-Resource* IE and then grouped into a RS resource set by a *NZP-CSI-RS-ResourceSet* IE. Other possible RS resource are defined by the lEs *CSI-IM-Resource,* and *SSB-Index.*
2) List of *CSI-ResourceConfig* lEs
   - Different *CSI-ResourceConfig* in the list can contain one or more different RS resource sets, chosen from List element 1). This may include NZP-CSI-RS-*ResourceSet, CSI-IM-ResourceSet,* and/or *CSI-SSB-ResourceSet,* respectively identified by suitable IDs (see e.g. *NZP-CSI-RS-ResourceSetld, CSI-IM-ResourceSetld,* and/or *CSI-SSB-ResourceSetld).*
3) List of CSI-ReportConfig lEs.
   - Different *CSI-ReportConfig* in the list configures different CSI report instance. This is the Information Element which links the reporting configuration of this CSI-*ReportConfig* (such as by PUCCH or PUSCH) to the measurement resource sets (i.e. one *CSI-ResourceConfig* in the above List element 2). *CSI-ResourceConfigID,* being included in the *CSI-ReportConfig* IE, identifies a *CSI-ResourceConfig* IE to be used.

Measurements and reporting can be carried out on a periodic, semi-periodic, aperiodic or event-triggered basis. The measurements results are reported by the UE to the gNB, e.g. as uplink control information on the PUCCH or the PUSCH. In one 5G compliant example, the CSI reporting is performed by the UE based on the definitions given in 3GPP TS 38.212 v17.4.0, in section 6.3.

In present 3GPP 5G systems, there are two types of reference signals that can be used for the measurements, the SSB (see above mentioned SSB-*Index*) and the CSI-RS (Channel State Information-Reference Signals; see above *NZP-CSI-RS-Resource* IE and *CSI-IM-Resource* IE). The SSB is always transmitted by the network and is not specific to a UE and is thus unflexible. For instance, the SSB can be used in connection with a comparatively wide beam. On the other hand, the CSI-RS can be specifically configured for a UE, and is quite flexible regarding when and how often it is transmitted (time domain) and regarding the frequency-domain resources. The CSI-RS can be used in connection with a comparatively narrow beam, because it can be configured for only one or a few UEs.

There are several reporting components of CSI in 5G NR (i.e. several different types of CSI), e.g. based on 3GPP TS 38.214 - section 5.2.1 thereof:
- CQI (Channel Quality Information)
- PMI (Precoding Matrix Indicator)
- CRI (CSI-RS Resource Indicator)
- SSBRI (SS/PBCH Resource Block Indicator)
- LI (Layer Indicator)
- RI (Rank Indicator)
- L1-RSRP, and/or
- Capability Index

One or more or a combination of different metrics can be reported by the UE. Generally, the metrics can be grouped into two types:
- L1-RSRP-related quantities (e.g. cri-RSRP and ssb-Index-RSRP, see later IE *CSI-Report Config*)
- CSI-related quantities (e.g. the rest from the IE *CSI-Report Config*)

The L1-RSRP-related quantities are new ones introduced for the first time in NR (Rel-15), and one of their purposes is to facilitate beam management. By contrast, the CSI-related quantities (such as CQI) are traditional ones, existing in LTE already. Those traditional CSI-related quantities can be used by the base station to choose e.g. the proper MIMO precoding, modulation and coding size, etc. to match the channel condition.

An exemplary implementation follows current definitions of the 5G 3GPP standards, such as defined in 3GPP TS 38.331, and may involve e.g. the following Information Elements (IE):
*CellGroupConfig, CSI-MeasConfig, CSI-ReportConfig, CSI-ResourceConfig, NZP-CSI-RS-Resource,* and *NZP-CSI-RS-ResourceSet.*

In particular, the Information Element (IE) *CSI-MeasConfig* and the Information Element CSI-*ReportConfig* indicate parameters of the CSI reporting framework usable by the UE to measure and then report the measurement results.

One possible following sequence of lEs for defining measurement and report according to the CSI framework includes:
- *CellGroupConfig* IE
   ∘ the *ServingCellConfig* IE of *SpCellConfig* or of *SCellConfig*
      ▪ *CSI-MeasConfig* IE
         - *CSI-ResourceConfig* IE
            ∘ *NZP-CSI-RS-ResourceSet*
               ▪ *NZP-CSI-RS-Resource*
            ∘ *CSI-SSB-ResourceSet*
               ▪ *SSB-Index*
            ∘ *CSI-IM-ResourceSet*
               ▪ *CSI-IM-Resource*
         - *CSI-ReportConfig* IE

Details for said framework are provided, for example, in 3GPP TS 38.331, section 6.3.2.

### Signal interference

Interference in wireless communication, such as 5G NR (New Radio), refers to disruption of a communication channel due to other signals, degrading performance and quality. This interference can originate from various sources and takes several forms, each with distinct characteristics and impacts.

Co-channel interference (CCI) happens when multiple transmitters operate on the same frequency channel. This leads to a significant reduction in signal quality and an increase in error rates. Adjacent channel interference (ACI) occurs when signals from neighboring frequency channels overlap, causing a decrease in the Signal-to-Interference-plus-Noise Ratio (SINR). Inter-symbol interference (ISI) results from symbols overlapping with subsequent symbols, typically due to multipath propagation where signals reflect off obstacles and arrive at different times. This causes distortion in the received signal and increases error rates.

Interference can come from both external and internal sources. External sources include natural phenomena like atmospheric noise and cosmic noise, as well as man-made sources such as other communication systems and industrial equipment. Internal sources of interference include network components like base stations and user equipment, as well as multipath propagation caused by reflections from buildings, terrain, and other obstacles.

### Further Improvements

The present disclosure in particular addresses interference by transmissions of other sources like user equipments and/or base stations, especially in the framework of low-power signal communication.

As discussed above, a LP-WUS may be transmitted with overlaid OFDM sequence(s) over symbols of an OOK modulated binary sequence. An OFDM-based LR may perform detection of the LP-WUS by detecting both OOK modulated binary sequence and the overlaid OFDM sequence(s). Further, to enhance, the robustness of the information transmission, the information bits carried by the OOK modulated binary sequence and the information bits carried by the overlaid OFDM sequence(s). In this case, an LR (e.g. implemented in a UE), which is capable of receiving and processing both, the OOK modulated binary sequence and the overlaid OFDM sequence(s), assumes that the information carried by the OOK modulated binary sequence corresponds to the information carried by the overlaid OFDM sequence(s).

However, due to, for example, deteriorating channel conditions, signal interference, timing errors, frequency errors or due to other reasons, the LR may obtain different information from the OOK modulated binary sequence than the LR obtains from the overlaid OFDM sequence(s). In such a case the LR would not know how to handle such information misalignment and which of the different information should be followed (or "applied").

The inventors have therefore identified the possibility of providing improved information misalignment handling procedures and parts thereof, which facilitate meeting the above needs and avoiding one or more of the disadvantages described above. The present invention relates to various solutions and variants for such improved information misalignment handling procedures, and especially an improved procedure for facilitating the determination of one or more operations to be performed in the case of detecting the presence of an information misalignment.

In the following, communication devices which may be UEs, base stations, and respective procedures to meet these needs will be described for the new radio access technology envisioned for the 5G mobile communication systems, but which may also be used in previous LTE-based mobile communication systems or future (e.g. 6G) mobile communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio (NR) access technology for the next communication systems is not fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a mobile station or mobile node or user terminal or user equipment (UE) is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes. The mobile station or mobile node or user terminal or user equipment (UE) is a first example of a communication apparatus within the communication network.

The term "base station" or "radio base station" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be gNB in a Non-Terrestrial Network (NTN) NR system. The base station or radio base station is a second example of a communication apparatus within the communication network.

Communication between the UE and the base station is typically standardized and may be defined by different layers, such as PHY, MAC, RRC etc. (see above background discussion).

As used herein, the term **"signal"** may relate to a signal, which carries first information in a first sequence and second information in a second sequence. The network may configure the UE with monitoring occasions or monitoring opportunities, which may refer to a specific, determined, defined, indicated, configured, predetermined, or predefined time interval or specific, determined, defined, indicated, configured, predetermined, or predefined resources within a transmission schedule, during which the signal or information is transmitted by the network and/or expected to be received by the UE, e.g. so as to ensure synchronized communication and efficient resource management between the network and user equipment. The UE may then monitor the occasions or opportunities for reception of the signal.

The term **"sequence"** may refer to an ordered series of bits, where each bit is represented by the presence (on) or absence (off) of a signal in case on OOK signal, or wherein one or more bits are represented by a modulation symbol in case of an (overlaid) OFDM signal. The sequence of Off-and On-periods and the OFDM modulate sequence(s) may encode information being transmitted in a communication system. For instance, the OFDM modulated sequence(s) may be overlaid within the ON-durations of the OOK signal.

The term **"misalignment"** between information may refer to an inconsistency between the bits representing the information. In particular, in the following detection of "the presence of a misalignment" between the first information and the second information may refer to determining that at least a part of the bit sequence representing the first information are unequal to a part of the bit sequence representing the second information, so that after decoding the bit sequences, the obtained first information differs from the obtained second information. Similar, in the following, the "absence of a misalignment" between the first information and the second information may refer to determining that the information obtained from the bit sequences after decoding is same (or equal). This could be the case, especially when the two information bits sequences represented by the first bit sequence and the second bit sequence are same or substantially the same (and for example only differ by the addition of redundant bits or error correction bits).

The term **"discard"** information can be understood, for example, as the act of not performing an operation possibly indicated by the information. In other words, if the communication apparatus discards information, the UE does not use (or "follow") the indication by the information, but the UE may instead follow other information or perform a different operation than the indicated one. Other possible terms could be used for the term "discard", such as **"drop", "omit", "neglect"** or **"ignore".**

**Fig. 4** illustrates a general, simplified and exemplary block diagram of a UE (also termed communication device/apparatus) and a scheduling device (also termed network node or communication device/apparatus, here exemplarily assumed to be located in the base station, e.g., the LTE eNB (alternatively termed ng-eNB) or the gNB in 5G NR). The UE and eNB/gNB are communicating with each other over a (wireless) physical channel respectively using the transceiver.

The communication devices may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

Different solutions of improved information misalignment handling procedures will be described in the following, which facilitate for a UE to perform improved information misalignment handling. In said connection, improved UEs, improved base stations and improved integrated circuits are presented, which participate separately or together in the improved information misalignment handling. Corresponding methods for the UE behavior and the base station behavior are provided as well. The integrated circuits may correspond to the UE and base station, and respectively their behavior.

The present solutions of the improved information misalignment handling procedure can be based on some or a combination of the different mechanisms described above in context of the exemplary 3GPP 5G-NR implementations, including e.g. the use of the UE measurement and measurement reporting mechanisms or details on the implementation scenarios (see e.g. Low power operation and Low-Power Wake-up signal) as currently discussed in 3GPP.

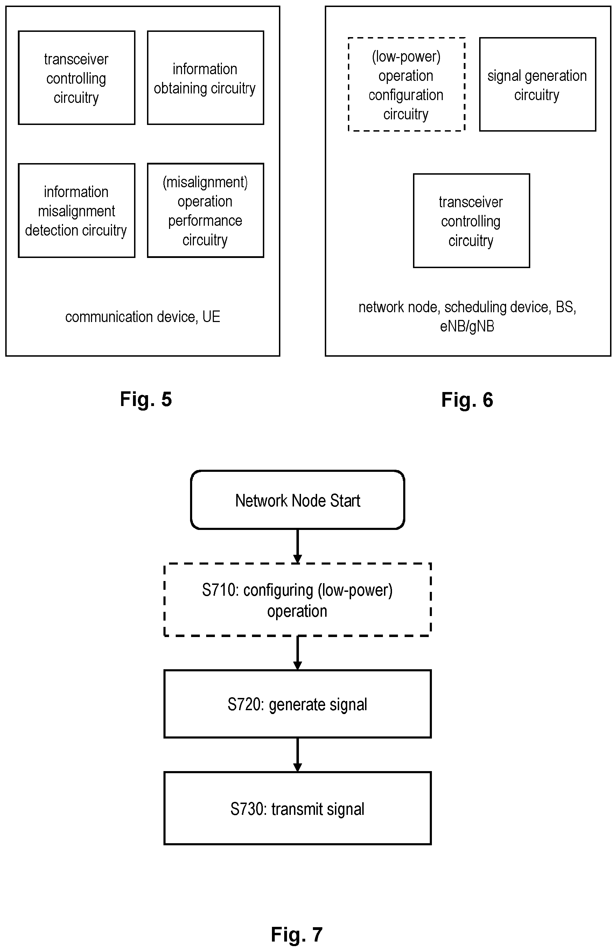

**Fig. 5** illustrates a simplified and exemplary structure of the processing circuitry of the UE according to an exemplary implementation of the improved information misalignment handling procedure, which can be implemented based on the general UE structure explained in connection with Fig. 4. The various structural elements of the processing circuitry illustrated in said Fig. 5 can be interconnected between one another e.g., with corresponding input/output nodes (not shown) e.g., in order to exchange control and user data and other signals. Although not shown for illustration purposes, the UE may include further structural elements.

As apparent from Fig. 5, the processing circuitry of the UE may include transceiver controlling circuitry, information obtaining circuitry, information misalignment detection circuitry and (misalignment) operation performance circuitry.

In the present case as will become apparent from the below disclosure, the processing circuitry of the UE can thus be exemplarily configured to at least partly perform one or more of controlling the transceiver to receive a signal, obtaining information from the signal, detecting presence or absence of a misalignment between information obtained from the signal, and selecting an operation to be performed in case of detecting presence of an information misalignment, etc.

In the present case, as will become apparent from the below disclosure, the transceiver controlling circuitry controls the transceiver of the UE can thus be exemplarily configured to at least partly perform one or more of receiving, a signal, which indicates a first sequence and a second sequence, etc.

One exemplary procedure as will be disclosed in more detail further below is implemented by a communication apparatus (such as a UE) that includes the following. A transceiver of the communication apparatus, in operation, (is configured to) receives, a signal indicating a first sequence and a second sequence. A processing circuitry of the communication apparatus, in operation, (is configured to) obtains first information from the first sequence and obtains second information from the second sequence, detects presence or absence of a misalignment between the first information and the second information, and in a case of detecting the presence of a misalignment between the first information and the second information performs at least one of the following operations: (i) discarding at least one of the first information and the second information, (ii) performing a transition to a main radio monitoring operation of the communication apparatus, and (iii) performing an error operation.

A corresponding exemplary communication method comprises the following steps performed by a communication apparatus (e.g. a UE):
receiving (S810) a signal indicating a first sequence and a second sequence;
obtaining (S820) first information from the first sequence and obtaining second information from the second sequence;
detecting (S830) presence or absence of a misalignment between the first information and the second information; and
in a case of detecting the presence of a misalignment between the first information and the second information (YES in step S830), performing (S840) at least one of the following misalignment operations: (i) discarding at least one of the first information and the second information, (ii) performing a transition to a main radio monitoring operation of the communication apparatus, and (iii) performing an error operation.

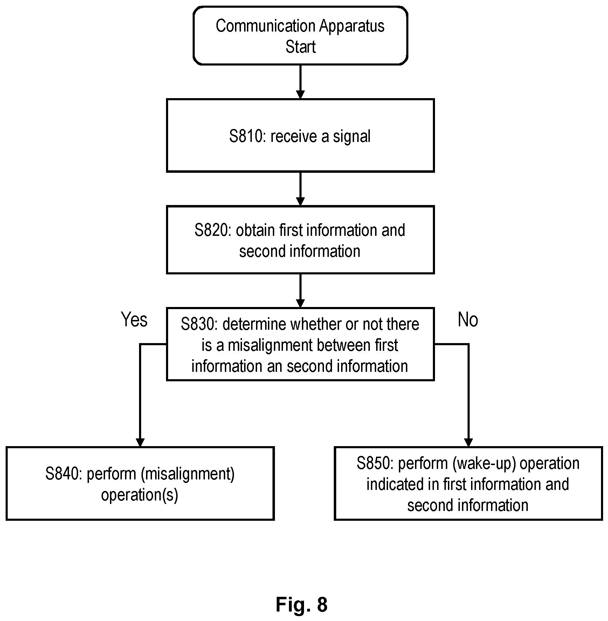

A corresponding sequence diagram for an exemplary UE behavior in line with the above-discussed UE and UE method is illustrated in **Fig. 8****.** As illustrated, the method may further comprise a step (S850) of performing an operation indicated by the first information and the second information, in a case of detecting the absence of a misalignment between the first information and the second information (NO in step S830). In other words, if the UE determines that no information misalignment between the first information and the second information exists (i.e. the first information corresponds to the second information), the UE follows the indication of the received signal in step S850, and performs a (wake-up) operation as indicated by the first information and the second information. Contrary, if the UE determines that an information misalignment between the first information and the second information exists (i.e. the first information does not corresponds to the second information), the UE does not follow at least one of the differing indications indicated by the first information and the second information in step S840. The above-described information misalignment handling procedure thus achieves the object and overcomes some of the drawbacks explained above. For instance, the improved information misalignment handling procedure facilitates for a UE to determine, which operation to perform, in case of detecting a misalignment between two information indicated in a signal. In this respect, the improved information misalignment handling procedure facilitates the indication process for the base station and the determination process for the UE.

Some exemplary implementations of the improved information misalignment handling procedure also involve improved network nodes. Correspondingly, the improved information misalignment handling procedure also provides improved network nodes that participate therein, as will be explained in the following.

**Fig. 6** illustrates a simplified and exemplary structure of the processing circuitry of a network node according to an exemplary implementation of the improved information misalignment handling procedure, which can be implemented based on the general network node structure explained in connection with Fig. 4. The various structural elements of the processing circuitry illustrated in said Fig. 6 can be interconnected between one another e.g., with corresponding input/output nodes (not shown) e.g., in order to exchange control and user data and other signals. Although not shown for illustration purposes, the network node may include further structural elements.

As apparent from Fig. 6, the processing circuitry of the network node may include signal generation circuitry, and transceiver controlling circuitry. Optionally, the processing circuitry may include (low-power) operation configuration circuitry.

In the present case as will become apparent from the below disclosure, the processing circuitry of the base station can thus be exemplarily configured to at least partly perform one or more of generating a signal, and controlling the transceiver to transmit the signal, etc.

In the present case as will become apparent from the below disclosure, the transceiver of the base station can thus be exemplarily configured to at least partly perform one or more of transmitting the generated signal, etc.

The processing circuitry of the network node may implement more functionality than the above-mentioned adapting the configured measurement gap skipping time period, as it may, for instance, further configure a low-power operation configuration or control the transceiver to transmit control signaling (e.g. to transmit the low-power operation configuration to the UE e.g. in higher layer, like RRC, signaling) and/or to control the transceiver to receive or transmit data.

One exemplary procedure as will be disclosed in more detail further below is implemented by a network node (such as a base station) that includes the following. A processing circuitry of the network node, in operation, (is configured to) encodes information in a first sequence and in a second sequence, and generates a signal indicating the first sequence and the second sequence. A transceiver of the network node, in operation, (is configured to) transmit the generated signal.

A corresponding method comprises the following steps performed by the network node (such as a base station):
encoding information in a first sequence and in a second sequence;
generating (S720) a signal indicating the first sequence and the second sequence; and
transmitting (S730) the signal.

A corresponding sequence diagram for an exemplary base station behavior in line with the above-discussed communication apparatus and corresponding method is illustrated in **Fig. 7****.** The sequence diagram illustrates an exemplary and simplified implementation of the above presented network node method. As illustrated, the method may further comprise an optional step (S710) of configuring a low power operation and generating corresponding configuration information, which may include, for example, for information on the information misalignment handling operation.

Different and exemplary implementations of the improved information misalignment handling procedure are explained in the following. For the explanation of the different implementation, some exemplary and simplifying assumptions are made.

According to one exemplary assumption, in the following, the signal is a low-power signal, and the first information is first low-power information and the second information is second low-power information. The network may configure the UE with monitoring occasions, which indicate frequency resources and/or time intervals, in which the UE can expect to receive the low-power signal. For example, the monitoring occasions could be configured in a low-power operation configuration, which is received by the UE in higher layer signaling (e.g. RRC signaling) before the beginning of the low-power operation. The UE may then perform a low power monitoring operation (e.g. turn on its low-power receiver) during the configured monitoring occasions, to check whether the low-power signal is received.

More particularly, in the following the low-power signal is a low-power wake-up signal, LP-WUS, which is received during one (or more) of the configured low-power monitoring occasions by the UE. In response to receiving and correctly decoding the LP-WUS (i.e. correctly obtaining the first information and the second information), the UE follows the indication of the LP-WUS. For example, LP-WUS may indicate the UE to initiate monitoring of a control channel according to the LP-WUS, such as, for example, to initiate PDCCH monitoring in case the UE is in the RRC_CONNECTED state or to initiate PDCCH monitoring, which can be but is not limited to paging PDCCH monitoring or Paging Early Indication (PEI) monitoring in PDCCH DCI format 2_7, in case the UE is in the RRC_IDLE state, or the RRC_INACTIVE state. The low-power information (i.e. the first low-power information and the second low-power information, if correctly obtained by the UE) may include one or more of a wake-up indication, a UE identifier (UE ID), which uniquely distinguishes the UE within the communication network, or a UE subgroup identifier, which uniquely distinguishes a sub-group of UEs (among all UEs) within the communication network. For example, if the low-power information is the UE ID, the UE may process a LP-WUS only, if it comprises the UE-ID. For example if the low-power information is the UE subgroup identifier, a UE associated with a sub-group A may process a LP-WUS only, if it is intended for the UE associated with sub-group group A, i.e. includes the sub-group A identifier, and a UE associated with sub-group B may process a LP-WUS only, if it is intended for the UE associated with subgroup B, i.e. includes the sub-group B identifier. Sub-group A or B may be explicitly configured or determined by rule according to a UE ID. The present disclosure is not limited to only two subgroups, but more than two UE sub-groups are possible.

However, this is only an example of a scenario to which the different exemplary implementations can be applied. In another scenarios, the different exemplary implementations may be applied to any other scenario, where a signal indicates more than one (information) sequence carrying the same information, for example in the context of transmissions of to and from Internet of Things (IOT) devices. Also in these examples, it may be the case that a receiving device (e.g. an IOT device) unintentionally obtains different information from the same signal due to deteriorating channel conditions or signal interference.

Furthermore, in the following, it is assumed that the signal is an On-Off-Keying, OOK, based signal in time domain, and the signal indicates the first sequence as an On-Off-Keying, OOK, based binary sequence in time domain, and indicates the second sequence in time domain or in frequency domain respectively overlaid on at least one On-duration of the signal. Hereby, the UE may obtain the first information by interpreting the On-durations as '1' and the Off-durations as '0' (or vice versa) or by interpreting a transition from an On-duration to an Off-duration as '1' and a transition from an Off-duration to an On-duration as '0'. But also other coding methods, which are based on OOK are possible. The second sequence may be in particular an OFDM modulated sequence. Hereby, in some examples, the UE may obtain the second information from a plurality of overlaid OFDM sequences, which carry part of information bits of the LP-WUS, and the location of the OOK 'ON' symbol(s), on which the OFDM sequences are overlaid. In other examples, the UE may obtain the second information from the bits modulated in an OFDM sequence modulated on a single OOK 'ON' symbol.

Additionally, in the following it is assumed that the UE detects presence or absence of a misalignment between the first information and the second information by determining whether the information bits detected (or obtained) from the OOK modulated sequence (as an example of the first information) of the (low-power) signal and the information bits detected (or obtained) from the overlaid OFDM modulated sequence(s) of the (low-power) signal are same. Hereby, the information bits may be obtained from the OOK modulated sequence by using error correction information (like CRC bits or other parity bits), if included in the OOK modulated sequence, and similar the information bits may be obtained from the overlaid OFDM modulated sequence(s) by using error correction information (like CRC bits or other parity bits), if included in the OFDM modulated sequence(s). In other words, the UE may detect presence or absence of a misalignment between the first information and the second information by comparing a first bit sequence included in (or representing) the first information and a second bit sequence included in (or representing) the second information. For example, the UE may detect the presence of a misalignment between the first information and the second information when the first bit sequence differs from the second bit sequence, e.g. if a value of a bit of the first bit sequence is not equal to (or same as) a value of a corresponding bit of the second bit sequence. Similar, the UE may detect the absence of a misalignment between the first information and the second information when the first bit sequence is equal to the second bit sequence, e.g. when all values of the bits of the first bit sequence are equal to (or same as) the values of the corresponding bits of the second bit sequence.

### First exemplary implementation - Discarding first information and second information

According to a first exemplary implementation of the improved information misalignment handling procedure, the circuitry (e.g. of a UE), in operation, in the case of detecting the presence of a misalignment between the first information and the second information, discards both the first information and the second information. In other words, in the first exemplary implementation, if the UE determines that the first information differs from the second information (i.e. detects an information misalignment), the UE determines to discard both the first information and the second information, which means that the UE determines to ignore the LP-WUS from which the first information and the second information was obtained.

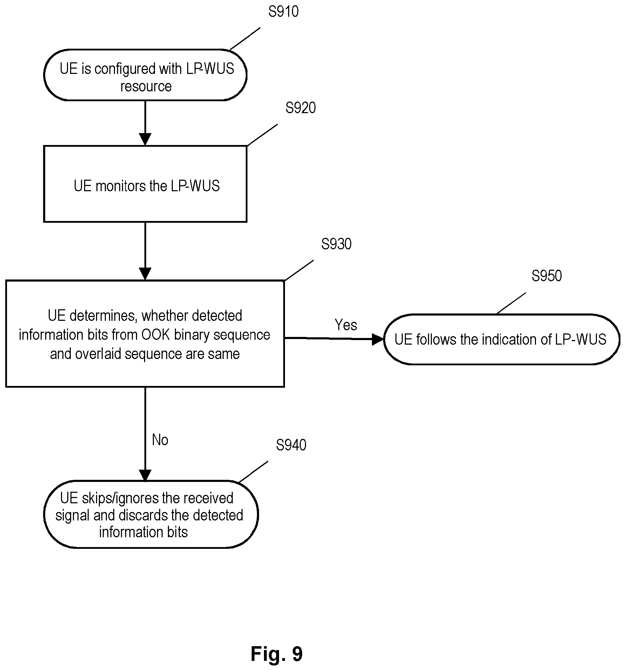

**Fig. 9** shows a flow chart illustrating exemplary operation steps performed according to the first exemplary implementation of the improved information misalignment handling operation. A UE is configured in step S910 with a LP-WUS monitoring occasion (or LP-WUS resource). The UE monitors in step S920 the LP-WUS monitoring occasion. When the UE receives (or detects) the LP-WUS in the LP-WUS monitoring occasion (compare to step S810 of Fig. 8), the UE obtains first information bits (as first information) by decoding the OOK binary sequence of the OOK modulated LP-WUS signal and obtains second information bits (as second information) by decoding the OFDM sequence(s) overlaid on one or more of the 'On'-durations of the LP-WUS signal (compare to step S820 of Fig. 8). If available, the UE may obtain the first information bits and/or the second information bits by using error correction coding. After having obtained the first information bits and the second information bits, the UE determines in step S930 whether the detected first information bits are same as (or equal to) the detected second information bits, so as to detect the presence or absence of a misalignment between the first information bits and the second information bits (compare to step S830 of Fig. 8) indicating a reception and/or decoding error.

In case the UE determines that the detected first information bits are same as (or equal to) the detected second information bits (YES in step S930), which means that the UE detects the absence of an information misalignment between the first information and the second information, the UE follows the indication of the LP-WUS in step S940, which means that the UE performs a wake-up operation to transition from the low power radio (LR) based operation to a main radio (MR) based operation as indicated by the first information and the second information (compare to step S850 of Fig. 8). For example, in the wake-up operation the UE may (i) initiate PDCCH monitoring, in case the UE is in the RRC_CONNECTED state (ii) initiate paging monitoring for a RRC_IDLE state a, in case the UE is in the RRC_IDLE state, and/or (iii) initiate paging monitoring for a RRC_INACTIVE state, in case the UE is in the RRC_INACTIVE state.

In case the UE determines that the detected first information bits are not the same as (or equal to) the detected second information bits (NO in step S930), which means that the UE detects the presence of an information misalignment between the first information and the second information, the UE skips (or ignores) the detected signal and discards the detected first information bits and the detected second information bits in step S950. This means, in the first exemplary implementation of the improved information misalignment handling procedure, the UE discards the first information and the second information as the information misalignment operation (compare to step S840 of Fig. 8), in the case of detecting an information misalignment for the information obtained from the received LP-WUS.

In this manner, the first exemplary implementation of the improved information misalignment handling operation can facilitate the UE power saving, because a UE will only perform a wake-up operation (e.g. a transition to the MR operation) to start PDCCH monitoring or paging monitoring in the case that no information misalignment between the information obtained from the LP-WUS is detected. Similar, the first exemplary implementation facilitates to avoid complex standard specification impact. On the other side, because the LP-WUS is ignored, each time the UE detects an information misalignment between the information obtained from the LP-WUS and needs to be transmitted by the network again to wake up the UE, the first exemplary implementation may in some cases result in a potential higher latency, more system overhead and larger network energy consumption.

### Second exemplary implementation - Discarding second information

According to a second exemplary implementation of the improved information misalignment handling procedure, the circuitry (e.g. of a UE), in operation, in the case of detecting the presence of a misalignment between the first information and the second information, discards the second information and uses the first information. In other words, in the second exemplary implementation, if the UE determines that the first information differs from the second information (i.e. detects an information misalignment), the UE determines to follow the first information, which means to ignore (or discard) the second information.

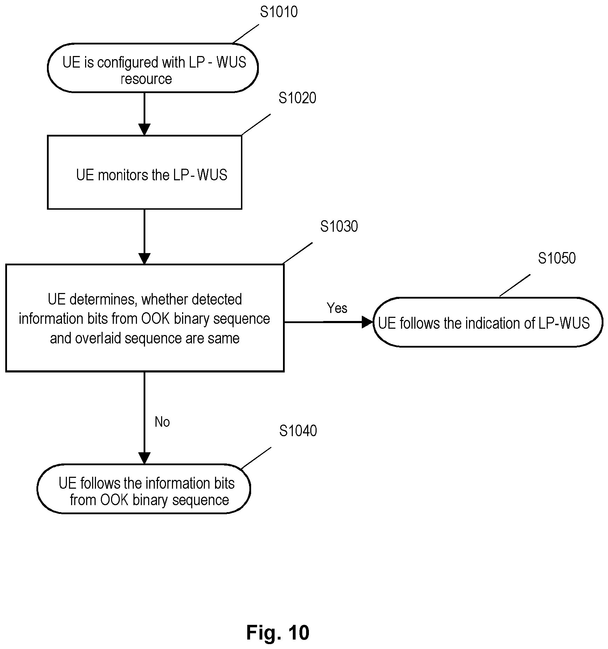

**Fig. 10** shows a flow chart illustrating exemplary operation steps performed according to the second exemplary implementation of the improved information misalignment handling operation. It should be noted that the operations performed by the UE in steps S1010, S1020, S1030, and S1050 of Fig. 10 respectively correspond to the operations performed by the UE in steps S910, S920, S930, S950 of Fig. 9, which were described with respect to the first exemplary implementation of the improved information misalignment handling operation, so that a more detailed description of these operations is omitted here. Especially, the operation as illustrated in Fig. 10 differs from the operation as illustrated in Fig. 9 only by the information misalignment operation (compare to step S840 of Fig. 8), which is performed in step S1040 by the UE, in case the UE determines that the detected first information bits are not the same as (or equal to) the detected second information bits (NO in step S1030), i.e. in case that the UE detects the presence of an information misalignment between the first information and the second information.

In step S1040, the UE follows the first information bits (as first information) obtained by decoding the OOK binary sequence of the OOK modulated LP-WUS signal. This means on the other hand that the UE discards the second information bits obtained by decoding the OFDM sequence(s) overlaid on one or more of the 'On'-durations of the LP-WUS signal, in the case of detecting an information misalignment for the information obtained from the received LP-WUS. In other word, in the case of detecting an information misalignment for the information obtained from the received LP-WUS, the UE performs a wake-up operation, like a transition from the low power radio (LR) operation to a main radio (MR) for initiating PDCCH monitoring or paging monitoring depending on the indication of the first information bits obtained from the received LP-WUS.

In this manner, the second exemplary implementation of the improved information misalignment handling operation can facilitate to enhance the performance of the low power operation, especially resulting in fewer false alarms and improved UE power saving operations when the detection of the overlaid OFDM sequence(s) is largely impacted by time/frequency errors, for example, due to worsening channel conditions. On the other hand, the second exemplary implementation of the improved information misalignment handling operation may in some cases result in lower reliability of the information detection, when the OOK binary sequence is affected by signal interference.

### Third exemplary implementation - Discarding first information

According to a third exemplary implementation of the improved information misalignment handling procedure, the circuitry (e.g. of a UE), in operation, in the case of detecting the presence of a misalignment between the first information and the second information, discards the first information and uses the second information. In other words, in the third exemplary implementation, if the UE determines that the first information differs from the second information (i.e. detects an information misalignment), the UE determines to follow the second information, which means to ignore (or discard) the first information.

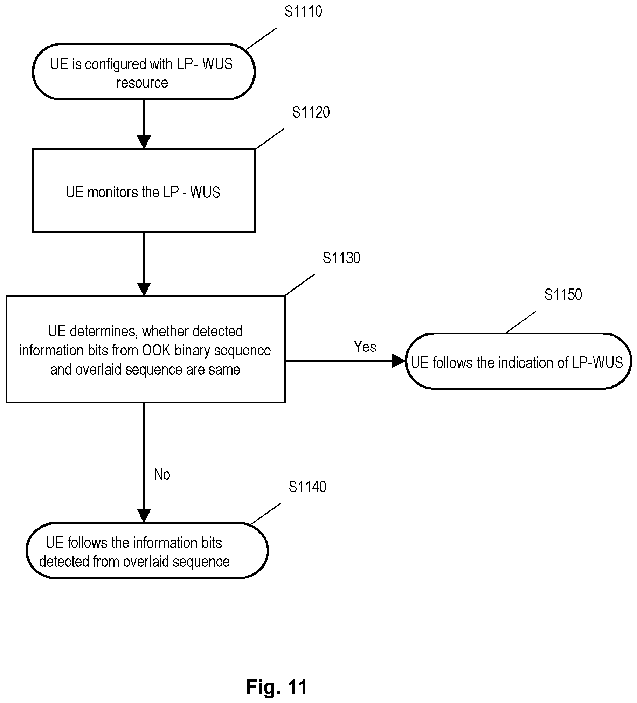

**Fig. 11** shows a flow chart illustrating exemplary operation steps performed according to the third exemplary implementation of the improved information misalignment handling operation. It should be noted that the operations performed by the UE in steps S1110, S1120, S1130, and S1150 of Fig. 11 respectively correspond to the operations performed by the UE in steps S910, S920, S930, S950 of Fig. 9, which were described with respect to the first exemplary implementation of the improved information misalignment handling operation, so that a more detailed description of these operations is omitted here. Especially, the operation as illustrated in Fig. 11 differs from the operation as illustrated in Fig. 9 only by the information misalignment operation (compare to step S840 of Fig. 8), which is performed in step S1140 by the UE, in case the UE determines that the detected first information bits are not the same as (or equal to) the detected second information bits (NO in step S1130), i.e. in case that the UE detects the presence of an information misalignment between the first information and the second information.

In step S1140, the UE follows the second information bits (as second information) obtained by decoding the OFDM sequence(s) overlaid on one or more of the 'On'-durations of the LP-WUS signal. This means on the other hand that the UE discards the first information bits (as first information) obtained by decoding the OOK binary sequence of the OOK modulated LP-WUS signal, in the case of detecting an information misalignment for the information obtained from the received LP-WUS. In other word, in the case of detecting an information misalignment for the information obtained from the received LP-WUS, the UE performs a wake-up operation, like a transition from the low power radio (LR) based operation to a main radio (MR) based operation for initiating PDCCH monitoring or paging monitoring depending on the indication of the second information bits obtained from the received LP-WUS.

In this manner, the third exemplary implementation of the improved information misalignment handling operation can facilitate to enhance the performance of the low power operation, especially resulting in fewer false alarms and improved UE power saving operations when the OOK binary sequence is affected by signal interference. On the other hand, the third exemplary implementation of the improved information misalignment handling operation may in some cases result in lower reliability of the information detection, when also the detection of the overlaid OFDM sequence(s), which in general is more robust against channel interference, is largely impacted by time/frequency errors, for example, due to worsening channel conditions.

### Fourth exemplary implementation - Transition to MR operation

According to a fourth exemplary implementation of the improved information misalignment handling procedure, the circuitry (e.g. of a UE), in the case of detecting the presence of a misalignment between the first information and the second information, performs a transition to a main radio monitoring operation of the communication apparatus. In other words, in the fourth exemplary implementation, if the UE determines that the first information differs from the second information (i.e. detects an information misalignment), the UE directly switches (transitions) to the MR-based operation for initiating normal PDCCH monitoring or paging monitoring. In some examples, this may in addition mean, that in such case the UE determines to discard both the first information and the second information, similar as in the first exemplary implementation of the improved information misalignment handling procedure.

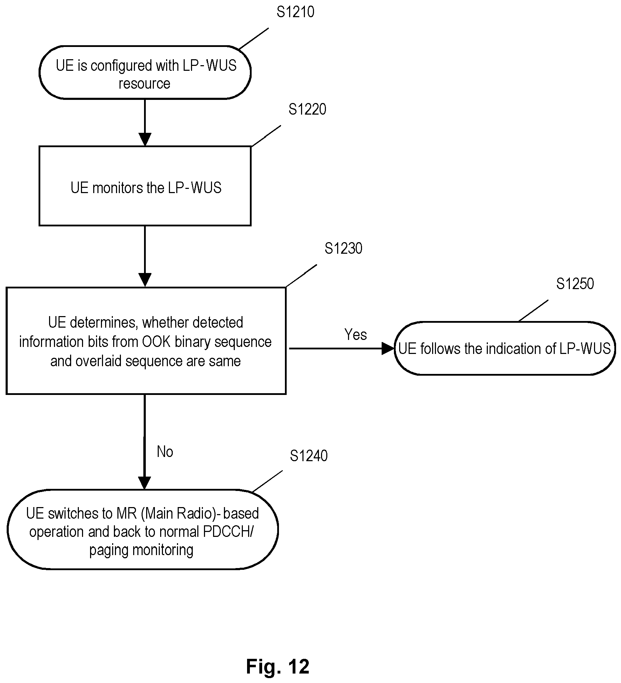

**Fig**. **12** shows a flow chart illustrating exemplary operation steps performed according to the fourth exemplary implementation of the improved information misalignment handling operation. It should be noted that the operations performed by the UE in steps S1210, S1220, S1230, and S1250 of Fig. 12 respectively correspond to the operations performed by the UE in steps S910, S920, S930, S950 of Fig. 9, which were described with respect to the first exemplary implementation of the improved information misalignment handling operation, so that a more detailed description of these operations is omitted here. Especially, the operation as illustrated in Fig. 12 differs from the operation as illustrated in Fig. 9 only by the information misalignment operation (compare to step S840 of Fig. 8), which is performed in step S1240 by the UE, in case the UE determines that the detected first information bits are not the same as (or equal to) the detected second information bits (NO in step S1230), i.e. in case that the UE detects the presence of an information misalignment between the first information and the second information.

In step S1240, the UE, in response to the detection of the presence of an information misalignment between the first information bits obtained by decoding the OOK binary sequence of the OOK modulated LP-WUS signal and the second information bits obtained by decoding the OFDM sequence(s) overlaid on one or more of the 'On'-durations of the LP-WUS signal, switches to the MR-based operation and back to normal PDCCH/monitoring. This means that the UE terminates the low power operation and directly performs a wake-up operation to like a transition from the LR-based operation to the MR-based operation regardless of the indication of the first information bits and the second information bits. For example, in the wake-up operation the UE may (i) initiate PDCCH monitoring, in case the UE is in the RRC_CONNECTED state (ii) initiate paging monitoring for a RRC_IDLE state a, in case the UE is in the RRC_IDLE state, and/or (iii) initiate paging monitoring for a RRC_INACTIVE state, in case the UE is in the RRC_INACTIVE state.

In this manner, the fourth exemplary implementation of the improved information misalignment handling operation can facilitate enhancing the reliability of the LP-WUS and avoid false alarms, because it is clear that the UE will also perform the wake-up operation in the case of detecting an information misalignment. On the other side, the fourth exemplary implementation may in some cases result in less power saving.

### Fifth exemplary implementation - Error operation

According to a fifth exemplary implementation of the improved information misalignment handling procedure, the circuitry (e.g. of a UE), in the case of detecting the presence of a misalignment between the first information and the second information, performs an error operation. In other words, in the fifth exemplary implementation, if the UE determines that the first information differs from the second information (i.e. detects an information misalignment), the UE treats it as an error case. The UE does not expect such case to happen. In some examples, this may in addition mean, that in such case the UE determines to discard (or ignore) both the first information and the second information and ignores the wake-up signal, similar as in the first exemplary implementation of the improved information misalignment handling procedure. Especially, in the fifth exemplary implementation, the UE is not expected to follow an indication from the signal (e.g. LP-WUS), in case of detecting an information misalignment of the information obtained from the signal (e.g. LP-WUS).

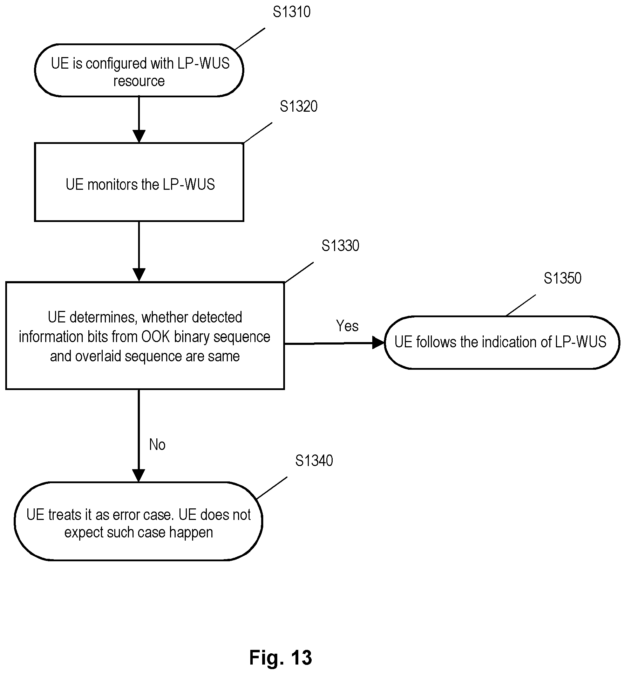

**Fig. 13** shows a flow chart illustrating exemplary operation steps performed according to the fifth exemplary implementation of the improved information misalignment handling operation. It should be noted that the operations performed by the UE in steps S1310, S1320, S1330, and S1350 of Fig. 13 respectively correspond to the operations performed by the UE in steps S910, S920, S930, S950 of Fig. 9, which were described with respect to the first exemplary implementation of the improved information misalignment handling operation, so that a more detailed description of these operations is omitted here. Especially, the operation as illustrated in Fig. 13 differs from the operation as illustrated in Fig. 9 only by the information misalignment operation (compare to step S840 of Fig. 8), which is performed in step S1340 by the UE, in case the UE determines that the detected first information bits are not the same as (or equal to) the detected second information bits (NO in step S1330), i.e. in case that the UE detects the presence of an information misalignment between the first information and the second information.

In step S1340, the UE treats the detection of the presence of an information misalignment between the first information bits obtained by decoding the OOK binary sequence of the OOK modulated LP-WUS signal and the second information bits obtained by decoding the OFDM sequence(s) overlaid on one or more of the 'On'-durations of the LP-WUS signal, as an error case. The UE does not expect such case to happen, and is therefore not require to perform any operation in response to detecting such case. Accordingly, in the fifth exemplary implementation, it is an aim to ensure on the network side that no information misalignment occurs at the UE, for example by carefully designing and configuring the low power operation.

In this manner, the fifth exemplary implementation of the improved information misalignment handling operation can facilitate avoiding large specification impact and UE implementation efforts caused by the information misalignment handling operation.

### Sixth exemplary implementation - Information misalignment reporting

According to a sixth exemplary implementation of the improved information misalignment handling procedure, the circuitry (e.g. of a UE), in operation, generates a misalignment report including an indication of the misalignment between the first information and the second information, and the transceiver (e.g. of a UE), in operation, transmits the misalignment report. In other words, in the sixth exemplary implementation the UE reports information related to the results of the misalignment detection, like the occurrence and/or the frequency of the presence of information misalignment between the information obtained from the signal. For example, the misalignment report may include information indicating how often the information misalignment is detected by the UE in a certain period, or may include information indicating that a misalignment is detected by the UE.

The transmission of the misalignment report may be triggered by the network. For example, the transmission of the misalignment report could be configured by the network on a periodic basis, i.e. with a configured periodicity without any network request, a semi-periodic request, i.e. with a configured periodicity, but starting with a network request, an aperiodic basis, i.e. upon network request, or an event-triggered basis, i.e. upon determination that an event has occurred, similar as it is known from the measurements reporting operation of a UE (described above). The misalignment report results may reported by the UE to the network node (e.g. gNB) on report resources configured from the network node. The report resources may, for example, include any or a combination of PUCCH resources, PRACH resources, SRS resources, or PUSCH resources.

In an optional implementation of the sixth exemplary implementation, the circuitry, in operation, generates the misalignment report in response to detecting the presence of a misalignment between the first information and the second information. In other words, if the UE determines that the first information differs from the second information (i.e. detects an information misalignment), the UE may directly report the information misalignment to the network (besides performing any of the information misalignment handling operations described in the previous exemplary embodiments). In some implementations, the misalignment report may be transmitted each time the information misalignment is detected. In other implementations, the misalignment report may be transmitted only after detecting the information misalignment for a certain amount of times (compare to operations described in the seventh exemplary implementation below).

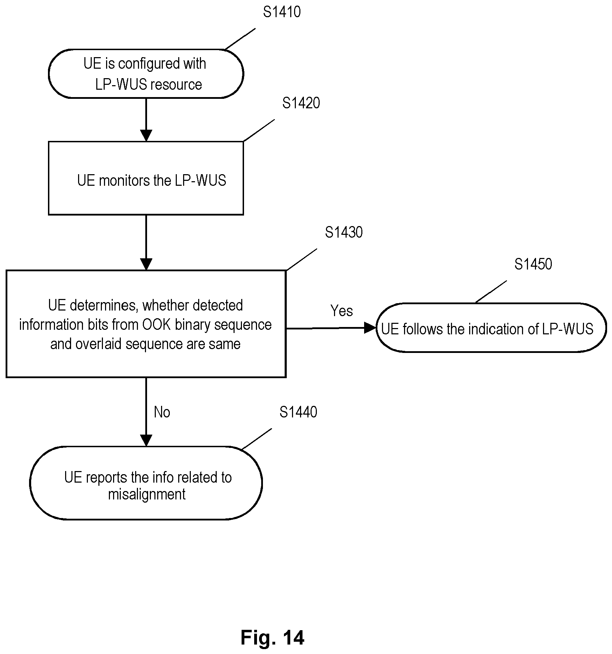

**Fig. 14** shows a flow chart illustrating exemplary operation steps performed according to the sixth exemplary implementation of the improved information misalignment handling operation. In this example, the UE issues the misalignment report, in response to detecting the information misalignment. It should be noted that the operations performed by the UE in steps S1410, S1420, S1430, and S1450 of Fig. 14 respectively correspond to the operations performed by the UE in steps S910, S920, S930, S950 of Fig. 9, which were described with respect to the first exemplary implementation of the improved information misalignment handling operation, so that a more detailed description of these operations is omitted here. Especially, the operation as illustrated in Fig. 14 differs from the operation as illustrated in Fig. 9 only by the information misalignment operation (compare to step S840 of Fig. 8), which is performed in step S1440 by the UE, in case the UE determines that the detected first information bits are not the same as (or equal to) the detected second information bits (NO in step S1430), i.e. in case that the UE detects the presence of an information misalignment between the first information and the second information.

In step S1440, the UE, in response to the detection of the presence of an information misalignment between the first information bits obtained by decoding the OOK binary sequence of the OOK modulated LP-WUS signal and the second information bits obtained by decoding the OFDM sequence(s) overlaid on one or more of the 'On'-durations of the LP-WUS signal, reports information related to the information misalignment report to the network node (or network). This means that the UE generates and transmits the misalignment report in the report resources configured by the network node. In addition, in such case the UE may perform any of the information misalignment handling operations described for steps S940, S1040, S1140, S1240, and S1340 above.

In this manner, the sixth exemplary implementation of the improved information misalignment handling operation can facilitate providing the network with information about the reliability of the LP-WUS at the UE side, so that the network can be supported in adjusting the configuration of the LP-WUS and the UE's handling on information misalignment to performance requirements, channel conditions and/or signal interference.

### Seventh exemplary implementation - Information misalignment count

According to a seventh exemplary implementation of the improved information misalignment handling procedure, the circuitry (e.g. of a UE), in operation, in the case of detecting the presence of a misalignment between the first information and the second information, increments a misalignment count, determines whether or not the misalignment count is equal to or larger than a misalignment threshold, and selects at least one of the operations to be performed depending on whether or not the misalignment count is equal to or larger than the misalignment threshold.

In other words, in the seventh exemplary implementation, the UE may determine which of the above described operations should be performed in response to repeatedly detecting the information misalignment depending on the misalignment count and the misalignment threshold. The misalignment threshold could be pre-configured in a firmware of the UE, or could be configured or dynamically indicated to the UE by the network node.

For example, as long as the misalignment count does not reach the misalignment threshold, the UE may determine to discard at least one of the first information and the second information as one of the operations to be performed, in the case of detecting the presence of a misalignment between the first information and the second information, as it was described for the first to third exemplary implementations. In addition or alternatively, as long as the misalignment count does not reach the misalignment threshold, the UE may generate and transmit the misalignment report in the case of detecting the presence of a misalignment between the first information and the second information, as it was described for the sixth exemplary implementation.

Then, when the misalignment count reaches (is equal to or larger than) the misalignment threshold the UE may determine to directly switches (transitions) to the MR-based operation for initiating normal PDCCH monitoring or paging monitoring, in the case of detecting the presence of a misalignment between the first information and the second information, as it was described for the fourth exemplary implementation, or may determine to perform the error operation, in the case of detecting the presence of a misalignment between the first information and the second information, as it was described for the fifth exemplary implementation. In addition or alternatively, when the misalignment count reaches (is equal to or larger than) the misalignment threshold, the UE may generate and transmit the misalignment report in the case of detecting the presence of a misalignment between the first information and the second information, as it was described for the sixth exemplary implementation.

In other examples, the UE may perform the same misalignment handling operations, which were described for the first to fifth exemplary implementation, independent from the misalignment count, but the UE may make the information misalignment report, which was described for the sixth exemplary implementation dependent on whether or not the misalignment count reaches the misalignment threshold.

In a first option, the misalignment count may be counted by a misalignment counter. Accordingly, in the first option, the UE counts the number of times the information misalignment was detected as misalignment count and then determines which of the above described operations should be performed in response to repeatedly detecting the information misalignment depending on the misalignment count. In a second option, the misalignment count may be counted by a misalignment timer. In the second option, the UE may start the misalignment timer after the first information misalignment detection and may not stop the timer upon following information misalignment detection, but only upon a successful information detection (i.e. without misalignment between the first information and the second information). Accordingly, in the second option, the UE counts the time since the first information misalignment was detected as misalignment count and then determines which of the above described operations should be performed in response to repeatedly detecting the information misalignment depending on the misalignment count.

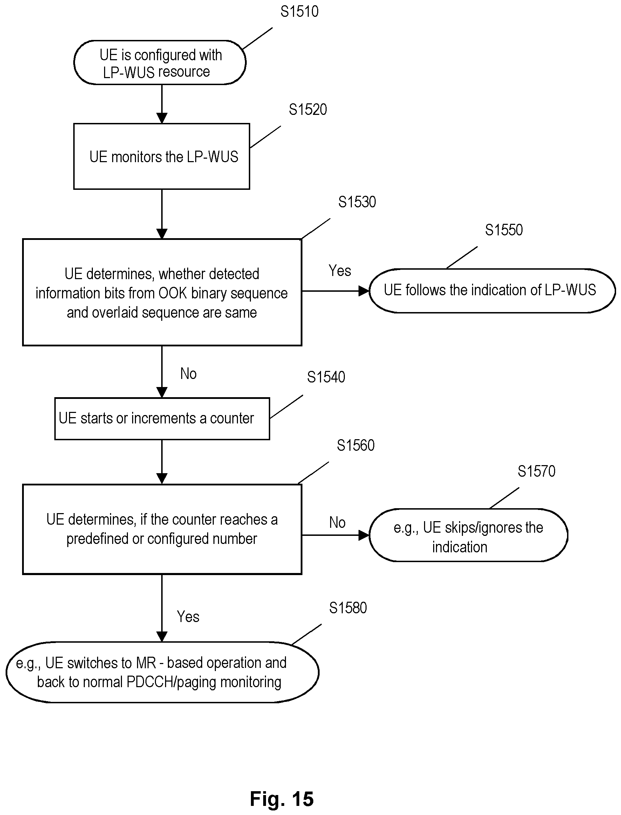

**Fig. 15** shows a flow chart illustrating exemplary operation steps performed according to the sixth exemplary implementation of the improved information misalignment handling operation. In this example, the UE issues the misalignment report, in response to detecting the information misalignment. It should be noted that the operations performed by the UE in steps S1510, S1520, S1530, and S1550 of Fig. 15 respectively correspond to the operations performed by the UE in steps S910, S920, S930, S950 of Fig. 9, which were described with respect to the first exemplary implementation of the improved information misalignment handling operation, so that a more detailed description of these operations is omitted here. Especially, the operation as illustrated in Fig. 15 differs from the operation as illustrated in Fig. 9 only by the information misalignment operation (compare to step S840 of Fig. 8), which is performed in step S1540 by the UE, in case the UE determines that the detected first information bits are not the same as (or equal to) the detected second information bits (NO in step S1530), i.e. in case that the UE detects the presence of an information misalignment between the first information and the second information.

In step S1540, the UE, in response to the detection of the presence of an information misalignment between the first information bits obtained by decoding the OOK binary sequence of the OOK modulated LP-WUS signal and the second information bits obtained by decoding the OFDM sequence(s) overlaid on one or more of the 'On'-durations of the LP-WUS signal, starts or increments the misalignment counter (or timer). After having started or incremented the counter (or timer), the UE determines in step S1560 whether or not the misalignment counter reaches a preconfigured or predetermined number (as misalignment threshold).

In case the UE determines that the misalignment counter (or timer) has not reached the misalignment threshold (NO in step S1560), the UE may determine in step S1570 to perform any or a combination of the misalignment operations described for the first to sixth exemplary implementations (as the operation(s) to be performed). In the illustrated example, the UE determines to skip (or ignore) the detected signal and to discard the detected first information bits and the detected second information bits in step S1570 (i.e. the UE performs the information misalignment handling operation according to the first exemplary implementation in step S1570).

In case the UE determines that the misalignment counter (or timer) has reached the misalignment threshold (YES in step S1560), the UE may determine in step S1580 to perform any other or another combination of the misalignment operations described for the first to sixth exemplary implementations (as the operation(s) to be performed). In the illustrated example, the UE determines to switches to the MR-based operation and back to normal PDCCH/monitoring in step S1580 (i.e. the UE performs the information misalignment handling operation according to the fourth exemplary implementation in step S1580).

In this manner, the seventh exemplary implementation of the improved information misalignment handling operation can facilitate for the network to control the usage of the LR or MR exit/entry conditions with higher reliability. On the other hand, the seventh exemplary implementation of the improved information misalignment handling operation may in some cases result in a slightly higher UE complexity and an increased latency in the UE response to the LP-WUS.

### Eighth exemplary implementation - Conditional information misalignment handling

According to an eighth exemplary implementation of the improved information misalignment handling procedure, the circuitry (e.g. of a UE), in operation, in the case of detecting the presence of a misalignment between the first information and the second information, determines whether or not a condition is fulfilled, and selects at least one of the operations to be performed depending on whether or not the condition is fulfilled. In other words, in the eighth exemplary implementation, the UE selects an information misalignment handling operation to be performed depending on a determination, whether or not the condition is fulfilled. The condition could be pre-configured in a firmware of the UE, or could be configured or dynamically indicated to the UE by the network node.

In a first option of the eighth exemplary implementation, the condition may be a measurement quality condition that defines that a result of a measurement on one or more reference signal(s) is above a threshold. The measurement result may include, for example, a Reference Signal Received Power, RSRP, value or a Reference Signal Received Quality, RSRQ, value or a Signal-to-Noise and Interference Ratio, SINR, value. The reference signal(s) may be one or more of the LP-SS, a SSB and a CSI-RS. In the first option of the eighth exemplary implementation, the circuitry (e.g. of a UE), in operation, in the case of detecting the presence of a misalignment between the first information and the second information, performs, an evaluation as to whether measurements on the signal fulfil a measurement quality condition; and selects at least one of the operations to be performed according to a result of the evaluation.

For example, in the case of detecting the presence of a misalignment between the first information and the second information and determining that the measurement result is below a threshold (i.e. the measurements on the reference signal do not fulfil the measurement quality condition), the UE may select any or a combination of the misalignment operations described for the first to seventh exemplary implementations (as the operation(s) to be performed). Because in such case, the second information bits (as second information) obtained by decoding the OFDM sequence(s) overlaid on one or more of the 'On'-durations of the LP-WUS signal may be more reliable, the UE may for example select to follow the indication of the second information, which means to ignore (or discard) the first information as described above for the third exemplary implementation.

On the other hand, in the case of detecting the presence of a misalignment between the first information and the second information and determining that the measurement result is above a threshold (i.e. the measurements on the reference signal fulfil the measurement quality condition), the UE may select any other or another combination of the misalignment operations described for the first to seventh exemplary implementations (as the operation(s) to be performed). Because in such case, the first information bits (as first information) obtained by decoding the OOK binary sequence of the OOK modulated LP-WUS signal may be more reliable, the UE may for example select to follow the indication of the first information, which means to ignore (or discard) the second information as described above for the second exemplary implementation.

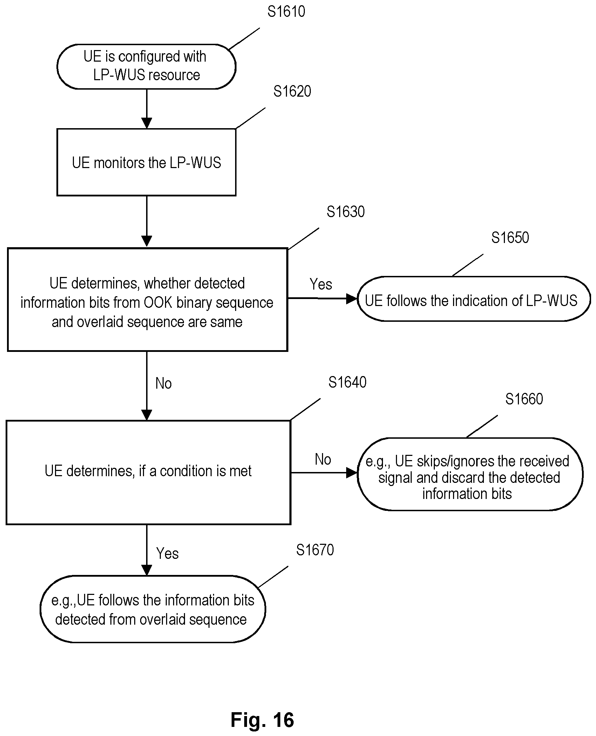

**Fig. 16** shows a flow chart illustrating exemplary operation steps performed according to the eighth exemplary implementation of the improved information misalignment handling operation. It should be noted that the operations performed by the UE in steps S1610, S1620, S1630, and S1650 of Fig. 16 respectively correspond to the operations performed by the UE in steps S910, S920, S930, S950 of Fig. 9, which were described with respect to the first exemplary implementation of the improved information misalignment handling operation, so that a more detailed description of these operations is omitted here. Especially, the operation as illustrated in Fig. 16 differs from the operation as illustrated in Fig. 9 only by the information misalignment operation (compare to step S840 of Fig. 8), which is performed in step S1640 by the UE, in case the UE determines that the detected first information bits are not the same as (or equal to) the detected second information bits (NO in step S1630), i.e. in case that the UE detects the presence of an information misalignment between the first information and the second information.

In step S1640, the UE, in response to the detection of the presence of an information misalignment between the first information bits obtained by decoding the OOK binary sequence of the OOK modulated LP-WUS signal and the second information bits obtained by decoding the OFDM sequence(s) overlaid on one or more of the 'On'-durations of the LP-WUS signal, determines whether or not a condition is met, for example, whether or not the measurement result is above the threshold (i.e. whether or not the measurements on a reference signal fulfil the measurement quality condition).

In case the UE determines that the condition is not fulfilled (NO in step S1640), the UE may, for example, select as the operation to be performed to skip (or ignore) the detected signal and to discard the detected first information bits and the detected second information bits in step S1660 (i.e. the UE performs the information misalignment handling operation according to the first exemplary implementation in step S1660).

In case the UE determines that the condition is fulfilled (YES in step S1640), the UE may, for example, select as the operation to be performed to follow the indication of the second information bits obtained by decoding the OFDM sequence(s) overlaid on one or more of the 'On'-durations of the LP-WUS signal in step S1660 (i.e. the UE performs the information misalignment handling operation according to the third exemplary implementation in step S1660).

In this manner, the eighth exemplary implementation of the improved information misalignment handling operation can facilitate for the network to judge the reliability of the LP-WUS detection at the UE side. This could help the network in controlling the tradeoff between the power saving at the UE side, the overhead at the network side and the service latency affected by the low power operation.

In a second option of the eighth exemplary implementation, the condition may be related to the reliability of the first information and the second information, which may be judged at the UE by determining whether or not the OOK binary sequence of the OOK modulated LP-WUS signal includes error correction bits and/or whether or not the OFDM sequence(s) overlaid on one or more of the 'On'-durations of the LP-WUS includes error correction bits. In the second option of the eighth exemplary implementation, the circuitry (e.g. of a UE), in operation, in the case of detecting the presence of a misalignment between the first information and the second information, determines whether or not the first sequence includes error correction information for the first information and/or determines whether or not the second sequence includes error correction information for the second information, and selects at least one of the operations to be performed according to a result of the determination.

The error correction information may be CRC bits, or may be other parity bits useable for error correction coding of the first information and/or the second information, like redundant bits or repetition bits.

For example, the UE may determine whether the OOK binary sequence of the OOK modulated LP-WUS signal includes error correction bits as the condition (e.g. in step S1640 of Fig. 16). Then, in the case of detecting the presence of a misalignment between the obtained first information bits (as first information) and the obtained second information bits (as second information) and in the case determining that the OOK binary sequence does not include error correction bits (i.e. the first information bits do not fulfil the condition), the UE may select any or a combination of the misalignment operations described for the first to seventh exemplary implementations (as the operation(s) to be performed). Because in such case, the first information bits (as first information) obtained by decoding the OOK binary sequence may be less reliable, the UE may for example select to ignore (or discard) the first information as described above, for example, for the first and third exemplary implementations. On the other hand, in the case of detecting the presence of a misalignment between the obtained first information bits (as first information) and the obtained second information bits (as second information) and in the case determining that the OOK binary sequence includes error correction bits (i.e. the first information bits do fulfil the condition), the UE may select any other or another combination of the misalignment operations described for the first to seventh exemplary implementations (as the operation(s) to be performed). Because in such case, the first information bits (as first information) obtained by decoding the OOK binary sequence may be more reliable, the UE may for example select to follow the indication of the first information bits as described above, for example, for the second exemplary implementation.

In another example, the UE may determine whether the OFDM sequence(s) overlaid on one or more of the 'On'-durations of the LP-WUS includes error correction bits as the condition (e.g. in step S1640 of Fig. 16). Then, in the case of detecting the presence of a misalignment between the obtained first information bits (as first information) and the obtained second information bits (as second information) and in the case determining that the OFDM sequence(s) does not include error correction bits (i.e. the second information bits do not fulfil the condition), the UE may select any or a combination of the misalignment operations described for the first to seventh exemplary implementations (as the operation(s) to be performed). Because in such case, the second information bits (as second information) obtained by decoding the OFDM sequence(s) may be less reliable, the UE may for example select to ignore (or discard) the second information as described above, for example, for the first and second exemplary implementations. On the other hand, in the case of detecting the presence of a misalignment between the obtained first information bits (as first information) and the obtained second information bits (as second information) and in the case of determining that OFDM sequence(s) includes error correction bits (i.e. the second information bits do fulfil the condition), the UE may select any other or another combination of the misalignment operations described for the first to seventh exemplary implementations (as the operation(s) to be performed). Because in such case, the second information bits (as second information) obtained by decoding the OFDM sequence(s)may be more reliable, the UE may for example select to follow the indication of the second information bits as described above, for example, for the third exemplary implementation.

In this manner, the eighth exemplary implementation of the improved information misalignment handling operation can facilitate for the UE to perform an information misalignment handling operation by judging the reliability of the LP-WUS detection at the UE side. This could help the UE in avoiding to perform wake-up operation due to false alarms (i.e. wrongful information detection).

### Ninth exemplary implementation - Configured information misalignment handling

According to a ninth exemplary implementation of the improved information misalignment handling procedure, the transceiver (e.g. of a UE), in operation, receives configuration information, the circuitry (e.g. of a UE), in operation, determines a configuration from the configuration information; and the circuitry, in operation, in the case of detecting the presence of a misalignment between the first information and the second information, selects at least one of the operations to be performed according to a rule obtained from the configuration information. For example, the configuration information may be low-power configuration information and the configuration may be a low-power operation configuration, with which the network configures the UE for performing the low power operation. For example, the configuration may be received by the UE in higher layer signaling (e.g. RRC signaling).

The configuration may be used by the network to configure the information misalignment handling procedure performed at the UE. In some examples, the network may configure to the UE any of the information misalignment handling procedures described above in the first to fifth exemplary implementations by the configuration information. In such case, the UE obtains from the configuration the information misalignment handling procedure to be performed or a rule how to handle the information misalignment in the case of detecting the information misalignment.

For example, the UE may obtain from the configuration a rule, which defines to follow the first information bits (as first information) obtained by decoding the OOK binary sequence, in case of detecting an information misalignment in the LP-WUS, so that the UE will follow the operations as described for the second exemplary implementation. Alternatively, the UE may obtain from the configuration a rule, which defines to follow the second information bits (as second information) obtained by decoding the overlaid OFDM sequence(s), in case of detecting an information misalignment in the LP-WUS, so that the UE will follow the operations as described for the third exemplary implementation. Alternatively, the UE may obtain from the configuration a rule, which defines to ignore the first information bits (as first information) and the second information bits (as second information), in case of detecting an information misalignment in the LP-WUS, so that the UE will follow the operations as described for the first exemplary implementation. Alternatively, the UE may obtain from the configuration a rule, which defines to initiate the transition to the MR-based operation, in case of detecting an information misalignment in the LP-WUS, so that the UE will follow the operations as described for the fourth exemplary implementation.

In addition or as an alternative, in some examples, the configuration may indicate to the UE information, when and how to perform the misalignment reporting as described in the sixth exemplary implementation. In addition or as an alternative, in some examples, the configuration may indicate to the UE information whether or not to use the misalignment counter (or timer) as described in the seventh exemplary implementation. In addition or as an alternative, in some examples, the configuration may indicate to the UE information on the conditional information misalignment handling (e.g. on the condition, the measurement object, the measurement quantity, the threshold, etc.) as described in the eighth exemplary implementation.

In other examples, the UE may determine from the configuration rules, which apply when the UE is configured with information detection in the OOK binary sequence (e.g. of the LP-WUS) and in the overlaid OFDM sequence(s) (e.g. of the LP-WUS). As a first example, the UE may determine as a rule that if the UE is configured with information detection in the overlaid OFDM sequence(s), the UE is expected by the network to always follow the indication obtained from the overlaid OFDM sequence(s) (e.g. the second information bits obtained from the LP-WUS). As a second example, the UE may determine as a rule that if the UE is configured with information detection in the overlaid OFDM sequence(s), the UE is allowed by the network to ignore the indication obtained from the OOK binary sequence (e.g. the first information bits obtained from the LP-WUS). As a third example, the UE may determine as a rule that if the UE is configured with information detection in the overlaid OFDM sequence(s), the UE is not required by the network to detect all the OOK symbols included the OOK binary sequence (e.g. the UE is not required to obtain the complete first information bits from the LP-WUS). As a fourth example, the UE may determine as a rule that if the UE is configured with information detection in the overlaid OFDM sequence(s) and the overlaid OFDM sequence(s) carries CRC for the second information bits, is expected by the network to only follow the indication obtained from the overlaid OFDM sequence(s) (e.g. the second information bits obtained from the LP-WUS).

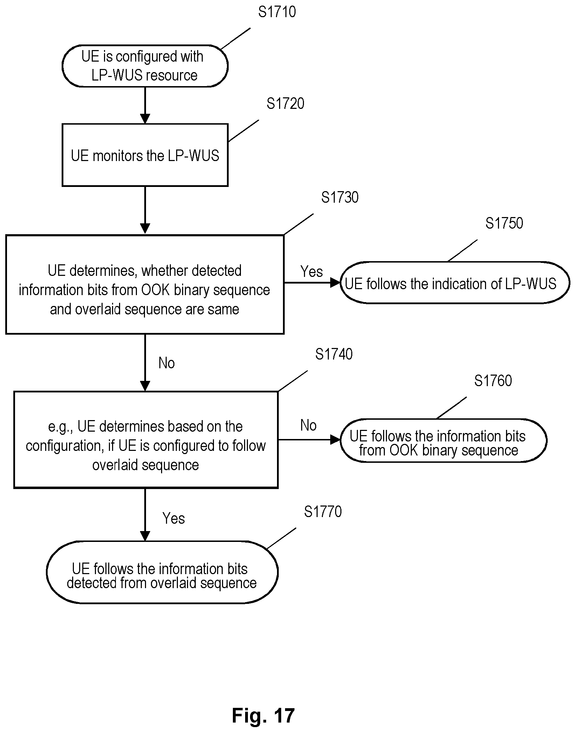

**Fig. 17** shows a flow chart illustrating exemplary operation steps performed according to the ninth exemplary implementation of the improved information misalignment handling operation. In this example, the UE issues the misalignment report, in response to detecting the information misalignment. It should be noted that the operations performed by the UE in steps S1710, S1720, S1730, and S1750 of Fig. 17 respectively correspond to the operations performed by the UE in steps S910, S920, S930, S950 of Fig. 9, which were described with respect to the first exemplary implementation of the improved information misalignment handling operation, so that a more detailed description of these operations is omitted here. Especially, the operation as illustrated in Fig. 17 differs from the operation as illustrated in Fig. 9 only by the information misalignment operation (compare to step S840 of Fig. 8), which is performed in step S1740 by the UE, in case the UE determines that the detected first information bits are not the same as (or equal to) the detected second information bits (NO in step S1730), i.e. in case that the UE detects the presence of an information misalignment between the first information and the second information.

In the illustrated example, the configuration may indicate to the UE whether or not to follow the second information bits obtained by decoding the overlaid OFDM sequence(s), in case of detecting an information misalignment in the LP-WUS.

Accordingly, in step S1740, the UE, in response to the detection of the presence of an information misalignment between the first information bits (as first information) obtained by decoding the OOK binary sequence of the OOK modulated LP-WUS signal and the second information bits obtained by decoding the OFDM sequence(s) overlaid on one or more of the `On'-durations of the LP-WUS signal, determines whether or not the configuration indicates to follow the second information bits (as second information), in case of detecting an information misalignment in the LP-WUS.

In case the UE determines that it is not configured to follow the second information bits (NO in step S1740), the UE may, for example, select as the operation to be performed to follow the first information bits obtained by decoding the OOK binary sequence, and to discard the detected second information bits in step S1760 (i.e. the UE performs the information misalignment handling operation according to the second exemplary implementation in step S1760).

In case the UE determines that it is configured to follow the second information bits (YES in step S1740), the UE may select as the operation to be performed to follow the indication of the second information bits obtained by decoding the OFDM sequence(s) and to discard the first information bits in step S1760 (i.e. the UE performs the information misalignment handling operation according to the third exemplary implementation in step S1760).

In this manner, the ninth exemplary implementation of the improved information misalignment handling operation can facilitate for the network to control the tradeoff between the power saving at the UE side, the overhead at the network side and the service latency affected by the low power operation.

### Tenth exemplary implementation - UE-specific information misalignment handling

According to a tenth exemplary implementation of the improved information misalignment handling procedure, the circuitry, in operation, in the case of detecting the presence of a misalignment between the first information and the second information, selects at least one of the operations to be performed according to a rule obtained from a firmware of the communication apparatus.

For example, the UE may obtain from its firmware (e.g. defining the UE implementation) a rule, which defines to follow the first information bits (as first information) obtained by decoding the OOK binary sequence, in case of detecting an information misalignment in the LP-WUS, so that the UE will follow the operations as described for the second exemplary implementation. Alternatively, the UE may obtain from the firmware a rule, which defines to follow the second information bits (as second information) obtained by decoding the overlaid OFDM sequence(s), in case of detecting an information misalignment in the LP-WUS, so that the UE will follow the operations as described for the third exemplary implementation. Alternatively, the UE may obtain from the firmware a rule, which defines to ignore the first information bits (as first information) and the second information bits (as second information), in case of detecting an information misalignment in the LP-WUS, so that the UE will follow the operations as described for the first exemplary implementation. In addition or alternatively, the UE may obtain from the firmware a rule, which defines to initiate the transition to the MR-based operation, in case of detecting an information misalignment in the LP-WUS, so that the UE will follow the operations as described for the fourth exemplary implementation. In addition or alternatively, the UE may obtain from the firmware a rule, which defines to perform the error operation, in case of detecting an information misalignment in the LP-WUS, so that the UE will follow the operations as described for the fifth exemplary implementation.

In addition or as an alternative, in some examples, the firmware may indicate to the UE information, when and how to perform the misalignment reporting as described in the sixth exemplary implementation. In addition or as an alternative, in some examples, the firmware may indicate to the UE information whether or not to use the misalignment counter (or timer) as described in the seventh exemplary implementation. In addition or as an alternative, in some examples, the firmware may indicate to the UE information on the conditional information misalignment handling (e.g. on the condition, the measurement object, the measurement quantity, the threshold, etc.) as described in the eighth exemplary implementation.

In other words, in the tenth exemplary implementation, the information misalignment handling operation, which the UE performs in case of detecting the information misalignment is not specified an is prescribed in the UE implementation.

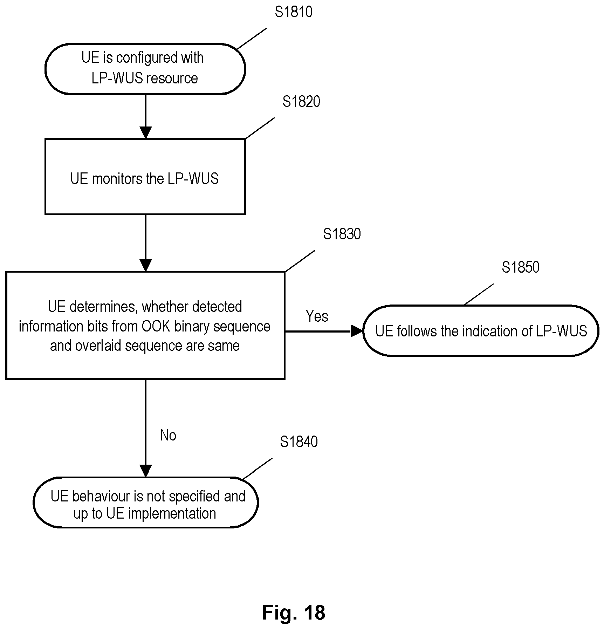

**Fig. 18** shows a flow chart illustrating exemplary operation steps performed according to the tenth exemplary implementation of the improved information misalignment handling operation. It should be noted that the operations performed by the UE in steps S1810, S1820, S1830, and S1850 of Fig. 18 respectively correspond to the operations performed by the UE in steps S910, S920, S930, S950 of Fig. 9, which were described with respect to the first exemplary implementation of the improved information misalignment handling operation, so that a more detailed description of these operations is omitted here. Especially, the operation as illustrated in Fig. 18 differs from the operation as illustrated in Fig. 9 only by the information misalignment operation (compare to step S840 of Fig. 8), which is performed in step S1840 by the UE, in case the UE determines that the detected first information bits are not the same as (or equal to) the detected second information bits (NO in step S1830), i.e. in case that the UE detects the presence of an information misalignment between the first information and the second information. In step S1840, the UE performs an information misalignment handling operation according to its UE implementation. Accordingly, the UE may perform any or a combination of the information misalignment handling operations as described for the first to eighth exemplary implementation according to its implementation.

In this manner, the tenth exemplary implementation of the improved information misalignment handling operation can facilitate avoiding large specification impact caused by the information misalignment handling operation.

### FURTHER IMPLEMENTATIONS

### RRC connection setup and reconfiguration procedures

Interactions between a UE, gNB, and AMF (a 5GC entity) in the context of a transition of the UE from RRC_IDLE to RRC_CONNECTED for the NAS part are described (see 3GPP TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signallingonly connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate ULand DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul, and the F1 interface is defined by the 3GPP. Further, the link between O-DU and O-RU is referred to as fronthaul and its functional split point may be Split Option 7-2x adopted as the O-RAN fronthaul specifications.

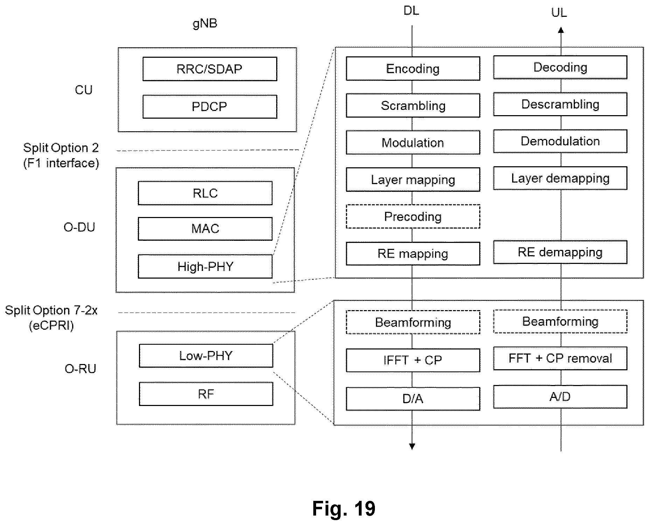

**Fig. 19** illustrates an example in which the base station functionality of the gNB is subjected to functional splitting into CU, O-DU, O-RU by Split Option 2 and Split Option 7-2x.

CU may include, for example, an RRC (radio resource control) function, an SOAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### Subband non-overlapping full duplex - SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, subbandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD - Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

*Further Variants, including Hardware and Software Implementation of the present disclosure*

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), Vehicle to Everything (V2X) communication, and communication between an Ambient loT Reader and an Ambient loT Device. The channels in the present disclosure may be replaced with PSCCH, PSSCH, Physical Sidelink Feedback Channel (PSFCH), PSBCH, PRDCH (Physical Reader-to-Device Channel), PORCH (Physical Device-to-Reader Channel), PDCCH, PUCCH, PDSCH, PUSCH, and PBCH. For example, control information of the present disclosure may be replaced with any of DCI, UCI, SCI (Sidelink Control Information), R2D Control Information and D2R Control Information.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### (Ambient loT)

The terminal and the base station in one exemplary embodiment of the preset disclosure may be replaced with any of an Ambient loT Device or an Ambient loT Reader.

The Ambient loT Device may be a wireless communication device having a backscattering function or having a transmission/reception bandwidth of several resource blocks or less. Further, the Ambient loT Reader may be a wireless communication device having a communication function with an Ambient loT Device. The Ambient loT Device may also be referred to as an Ambient loT terminal, an loT terminal, an LPWA terminal, or a Tag.

### (Hardware and Software implementation)

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied. Computer-readable medium may be employed to implement the present disclosure, such as a memory storing instructions executable by processing circuitry, or storing other information, configuration registers storing configuration settings, etc., and various combinations thereof.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Further Aspects

According to a first aspect, there is provided a communication apparatus, comprising a transceiver, which, in operation, receives, a signal indicating a first sequence and a second sequence, and circuitry, which, in operation, obtains first information from the first sequence and obtains second information from the second sequence, detects presence or absence of a misalignment between the first information and the second information, and in a case of detecting the presence of a misalignment between the first information and the second information performs at least one of the following operations (i) discarding at least one of the first information and the second information, (ii) performing a transition to a main radio monitoring operation of the communication apparatus, and (iii) performing an error operation.

According to a second aspect, the signal is a low-power signal, and the first information is first low-power information and the second information is second low-power information. In an optional implementation, the low-power signal is a low-power wake-up signal, LP-WUS, and the circuitry, in operation, initiates monitoring of a control channel according to the LP-WUS. In another optional implementation, the low-power signal is received in a low-power monitoring operation of the communication apparatus.

According to a third aspect, the signal is an On-Off-Keying, OOK, based signal in time domain, and the signal indicates the first sequence as an On-Off-Keying, OOK, based binary sequence in time domain, and indicates the second sequence in time domain or in frequency domain respectively overlaid on at least one On-duration of the signal.

According to a fourth aspect, the circuitry, in operation, detects presence or absence of the misalignment between the first information and the second information by comparing a first bit sequence included in the first information and a second bit sequence included in the second information. In an optional implementation, the circuitry, in operation, detects the presence of a misalignment between the first information and the second information when the first bit sequence differs from the second bit sequence. In another optional implementation, the circuitry, in operation, detects the absence of a misalignment between the first information and the second information when the first bit sequence is equal to the second bit sequence.

According to a fifth aspect, the circuitry, in operation, in the case of detecting the presence of a misalignment between the first information and the second information, discards both the first information and the second information.

According to a sixth aspect, the circuitry, in operation, in the case of detecting the presence of a misalignment between the first information and the second information, discards the second information and uses the first information.

According to a seventh aspect, the circuitry, in operation, in the case of detecting the presence of a misalignment between the first information and the second information, discards the first information and uses the second information.

According to an eighth aspect, the circuitry, in operation, in the case of detecting the presence of a misalignment between the first information and the second information, increments a misalignment count, determines whether or not the misalignment count is equal to or larger than a misalignment threshold, and selects at least one of the operations to be performed depending on whether or not the misalignment count is equal to or larger than the misalignment threshold. In an optional implementation, the misalignment count is counted by a misalignment counter. In another optional implementation, the misalignment count is counted by a misalignment timer.

According to a ninth aspect, the circuitry, in operation, generates a misalignment report including an indication of the misalignment between the first information and the second information, and the transceiver, in operation, transmits the misalignment report.

According to a tenth aspect, the circuitry, in operation, generates the misalignment report in response to detecting the presence of a misalignment between the first information and the second information.

According to an eleventh aspect, the circuitry, in operation, in the case of detecting the presence of a misalignment between the first information and the second information, performs, an evaluation as to whether measurements on the signal fulfil a measurement quality condition, and selects at least one of the operations to be performed according to a result of the evaluation.

According to a twelfth aspect, the circuitry, in operation, in the case of detecting the presence of a misalignment between the first information and the second information, determines whether or not the first sequence includes error correction information for the first information and/or determines whether or not the second sequence includes error correction information for the second information, and selects at least one of the operations to be performed according to a result of the determination. In an optional implementation, the circuitry in a case of determining that the first sequence includes error correction information selects to discard the second information, and/or the circuitry in a case of determining that the second sequence includes error correction information selects to discard the first information.

According to a thirteenth aspect, the transceiver, in operation, receives configuration information, the circuitry, in operation, determines a configuration from the configuration information, and the circuitry, in operation, in the case of detecting the presence of a misalignment between the first information and the second information, selects at least one of the operations to be performed according to a rule obtained from the configuration information. In an optional implementation, the configuration information is low-power configuration information and the configuration is a low-power operation configuration.

According to a fourteenth aspect, the circuitry, in operation, in the case of detecting the presence of a misalignment between the first information and the second information, selects at least one of the operations to be performed according to a rule obtained from a firmware of the communication apparatus.

According to a fifteenth aspect, there is provided a method comprising the following steps performed by a communication apparatus:
- receiving a signal indicating a first sequence and a second sequence;
- obtaining first information from the first sequence and obtaining second information from the second sequence;
- detecting presence or absence of a misalignment between the first information and the second information; and
- in a case of detecting the presence of a misalignment between the first information and the second information, performing at least one of the following operations (i) discarding at least one of the first information and the second information, (ii) performing a transition to a main radio monitoring operation of the communication apparatus, and (iii) performing an error operation.

According to an optional implementation, the method further includes one or a combination of the steps performed by the communication apparatus of any of the first to fourteenth aspects.

According to a sixteenth aspect, there is provided an integrated circuit for controlling a process of a communication apparatus (e.g. a UE), the process including:
- receiving a signal indicating a first sequence and a second sequence;
- obtaining first information from the first sequence and obtaining second information from the second sequence;
- detecting presence or absence of a misalignment between the first information and the second information; and
- in a case of detecting the presence of a misalignment between the first information and the second information, performing at least one of the following operations (i) discarding at least one of the first information and the second information, (ii) performing a transition to a main radio monitoring operation of the communication apparatus, and (iii) performing an error operation.

According to an optional implementation, the process further includes one or a combination of the steps performed by the communication apparatus of any of the first to fourteenth aspects.

According to a seventeenth aspect, there is provided a network node (e.g. a base station), comprising a processing circuitry, which, in operation, encodes information in a first sequence and in a second sequence, and generates a signal indicating the first sequence and the second sequence. , and a transceiver which, in operation, transmits the generated signal. According to a sixteenth aspect, provided in addition to the fifteenth aspect.

According to an eighteenth aspect, there is provided a method comprising the following steps performed by a network node:
- encoding information in a first sequence and in a second sequence;
- generating a signal indicating the first sequence and the second sequence; and
- transmitting the signal.

According to a nineteenth aspect, there is provided an integrated circuit for controlling a process of a network node, the process including:
- encoding information in a first sequence and in a second sequence;
- generating a signal indicating the first sequence and the second sequence; and
- transmitting the signal.

## Claims

1. A communication apparatus, comprising:
a transceiver, which, in operation, receives, a signal indicating a first sequence and a second sequence;
circuitry, which, in operation,
obtains first information from the first sequence and obtains second information from the second sequence,
detects presence or absence of a misalignment between the first information and the second information, and
in a case of detecting the presence of a misalignment between the first information and the second information performs at least one of the following operations:
• discarding at least one of the first information and the second information,
• performing a transition to a main radio monitoring operation of the communication apparatus, and
• performing an error operation.

2. The communication apparatus according to claim 1, wherein the signal is a low-power signal, and wherein the first information is first low-power information and the second information is second low-power information,
optionally, wherein the low-power signal is a low-power wake-up signal, LP-WUS, and wherein the circuitry, in operation, initiates monitoring of a control channel according to the LP-WUS;
optionally, wherein the low-power signal is received in a low-power monitoring operation of the communication apparatus.

3. The communication apparatus according to claim 1 or 2, wherein
the signal is an On-Off-Keying, OOK, based signal in time domain, and
the signal indicates the first sequence as an On-Off-Keying, OOK, based binary sequence in time domain, and indicates the second sequence in time domain or in frequency domain respectively overlaid on at least one On-duration of the signal.

4. The communication apparatus according to any one of claims 1 to 3, wherein the circuitry, in operation, detects presence or absence of the misalignment between the first information and the second information by comparing a first bit sequence included in the first information and a second bit sequence included in the second information;
optionally, wherein the circuitry, in operation, detects the presence of a misalignment between the first information and the second information when the first bit sequence differs from the second bit sequence;
optionally, wherein the circuitry, in operation, detects the absence of a misalignment between the first information and the second information when the first bit sequence is equal to the second bit sequence.

5. The communication apparatus according to any one of claims 1 to 4, wherein the circuitry, in operation, in the case of detecting the presence of a misalignment between the first information and the second information, discards both the first information and the second information.

6. The communication apparatus according to any one of claims 1 to 4, wherein the circuitry, in operation, in the case of detecting the presence of a misalignment between the first information and the second information, discards the second information and uses the first information.

7. The communication apparatus according to any one of claims 1 to 4, wherein the circuitry, in operation, in the case of detecting the presence of a misalignment between the first information and the second information, discards the first information and uses the second information.

8. The communication apparatus according to any one of claims 1 to 7, wherein the circuitry, in operation, in the case of detecting the presence of a misalignment between the first information and the second information,
• increments a misalignment count,
• determines whether or not the misalignment count is equal to or larger than a misalignment threshold, and
• selects at least one of the operations to be performed depending on whether or not the misalignment count is equal to or larger than the misalignment threshold;
optionally, wherein the misalignment count is counted by a misalignment counter;
optionally, wherein the misalignment count is counted by a misalignment timer.

9. The communication apparatus according to any one of claims 1 to 8, wherein the circuitry, in operation, generates a misalignment report including an indication of the misalignment between the first information and the second information; and
the transceiver, in operation, transmits the misalignment report.

10. The communication apparatus according to claim 8, wherein the circuitry, in operation, generates the misalignment report in response to detecting the presence of a misalignment between the first information and the second information.

11. The communication apparatus according to any one of claims 1 to 10, wherein the circuitry, in operation, in the case of detecting the presence of a misalignment between the first information and the second information,
• performs, an evaluation as to whether measurements on the signal fulfil a measurement quality condition; and
• selects at least one of the operations to be performed according to a result of the evaluation.

12. The communication apparatus according to any one of claims 1 to 10, wherein the circuitry, in operation, in the case of detecting the presence of a misalignment between the first information and the second information,
• determines whether or not the first sequence includes error correction information for the first information and/or determines whether or not the second sequence includes error correction information for the second information; and
• selects at least one of the operations to be performed according to a result of the determination.
optionally, wherein the circuitry in a case of determining that the first sequence includes error correction information selects to discard the second information, and/or wherein the circuitry in a case of determining that the second sequence includes error correction information selects to discard the first information.

13. The communication apparatus according to any one of claims 1 to 12, wherein the transceiver, in operation, receives configuration information,
wherein the circuitry, in operation, determines a configuration from the configuration information; and
the circuitry, in operation, in the case of detecting the presence of a misalignment between the first information and the second information, selects at least one of the operations to be performed according to a rule obtained from the configuration information;
optionally, wherein the configuration information is low-power configuration information and the configuration is a low-power operation configuration.

14. The communication apparatus according to any one of claims 1 to 12, wherein the circuitry, in operation, in the case of detecting the presence of a misalignment between the first information and the second information, selects at least one of the operations to be performed according to a rule obtained from a firmware of the communication apparatus.

15. A communication method comprising:
receiving a signal indicating a first sequence and a second sequence;
obtaining first information from the first sequence and obtaining second information from the second sequence;
detecting presence or absence of a misalignment between the first information and the second information; and
in a case of detecting the presence of a misalignment between the first information and the second information, performing at least one of the following operations:
• discarding at least one of the first information and the second information,
• performing a transition to a main radio monitoring operation of the communication apparatus, and
• performing an error operation.
